(19) Europäisches Patentamt / European Patent Office / Office européen des brevets

(11) **EP 4 138 475 A1**

(12) **EUROPEAN PATENT APPLICATION**
published in accordance with Art. 153(4) EPC

(43) Date of publication:
**22.02.2023 Bulletin 2023/08**

(21) Application number: **21803497.3**

(22) Date of filing: **12.05.2021**

(51) International Patent Classification (IPC):
*H04W 72/02* (2009.01)

(52) Cooperative Patent Classification (CPC):
**H04W 72/02; H04W 72/04; H04W 72/56**

(86) International application number:
**PCT/CN2021/093450**

(87) International publication number:
**WO 2021/228163 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.05.2020 CN 202010415354**

(71) Applicant: **Huawei Technologies Co., Ltd.
Longgang District,
Shenzhen,
Guangdong 518129 (CN)**

(72) Inventors:
• LIU, Zhe
  **Shenzhen, Guangdong 518129 (CN)**
• LI, Chao
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **METHOD, APPARATUS AND SYSTEM FOR DETERMINING RESOURCE**

(57)    Embodiments of this application provide a resource determining method, an apparatus, and a system, and relate to the fields of V2X, the Internet of Vehicles, intelligent connected vehicles, intelligent driving, assisted driving, and the like, to resolve a conventional-technology technical problem that a data sending failure is caused when a terminal apparatus needs to send aperiodic data, a first resource determined by an auxiliary terminal apparatus may not match a time-frequency resource required by the aperiodic data. The method includes: A first terminal apparatus receives, from a second terminal apparatus, first indication information that indicates the first terminal apparatus to determine a first resource for the second terminal apparatus; the first terminal apparatus determines the first resource for the second terminal apparatus based on the first indication information; and the first terminal apparatus indicates the first resource to the second terminal apparatus, where the first resource is used by the second terminal apparatus to send data.

FIG. 3

## Description

This application claims priority to Chinese Patent Application No. 202010415354.8, filed with the China National Intellectual Property Administration on May 15, 2020 and entitled "RESOURCE DETERMINING METHOD, APPARATUS, AND SYSTEM", which is incorporated herein by reference in its entirety.

## TECHNICAL FIELD

The present invention relates to the field of communication technologies, and in particular, to a resource determining method, an apparatus, and a system.

## BACKGROUND

With rapid development of mobile communication, services such as video chat, virtual reality (virtual reality, VR), and augmented reality (augmented reality, AR) are widely used. Therefore, a terminal apparatus imposes an increasing requirement on a bandwidth. To meet the requirement of the bandwidth of the terminal apparatus, device-to-device (device-to-device, D2D) communication is provided. The D2D communication may allow terminal apparatuses to communicate with each other over a sidelink (sidelink, SL) based on a proximity-based services communication 5 (proximity-based services communication 5, PC5) interface. The D2D communication may include a plurality of types such as vehicle to vehicle (vehicle to vehicle, V2V) communication, vehicle to pedestrian (vehicle to pedestrian, V2P) communication, and vehicle to infrastructure (vehicle to infrastructure, V2I) communication.

When the terminal apparatus sends data over the SL, the terminal apparatus may determine, based on a resource sensing (sensing) mechanism, a time-frequency resource that can be used, that is, a candidate resource, and then select, from the candidate resource, a time-frequency resource used for the SL. When the terminal apparatus needs to save energy and cannot support the resource sensing mechanism, or when the terminal apparatus is outside a network coverage area or in an environment with poor network quality, and the candidate resource determined by using the resource sensing mechanism is inaccurate, the terminal apparatus may determine the candidate resource based on a first resource determined by an auxiliary terminal apparatus.

In a conventional technology, an auxiliary terminal apparatus periodically determines, based on the resource sensing mechanism, a time-frequency resource that can be used, that is, the first resource, and sends the first resource to the terminal apparatus. When the terminal apparatus needs to send aperiodic data, the first resource determined by the auxiliary terminal apparatus may not match a time-frequency resource required by the aperiodic data. To be specific, the time-frequency resource that is used for the SL and that is selected by the terminal apparatus from the first resource in an aperiodic period may be occupied by another terminal apparatus. As a result, a data sending failure occurs.

## SUMMARY

In view of this, an objective of embodiments of this application is to provide a resource determining method, an apparatus, and a system, to resolve a conventional-technology technical problem of a data sending failure caused when a terminal apparatus needs to send aperiodic data, a first resource determined by an auxiliary terminal apparatus may not match a time-frequency resource required by the aperiodic data.

According to a first aspect, a resource determining method is provided. The method includes: A first terminal apparatus receives, from a second terminal apparatus, first indication information that indicates the first terminal apparatus to determine a first resource for the second terminal apparatus; the first terminal apparatus determines, for the second terminal apparatus based on the first indication information, the first resource used by the second terminal apparatus to send data; and the first terminal apparatus indicates the first resource to the second terminal apparatus.

Based on the first aspect, in this embodiment of this application, the first terminal apparatus may determine, for the second terminal apparatus based on the received first indication information, the first resource used by the second terminal apparatus to send the data, and indicate the determined first resource to the second terminal apparatus. In comparison with the conventional technology, in this embodiment of this application, the second terminal apparatus may send the first indication information to the first terminal apparatus when the second terminal apparatus needs to send the data, so that the first terminal apparatus determines, based on the first indication information, the first resource used by the second terminal apparatus to send the data. This avoids a case in which a time-frequency resource required when the second terminal apparatus sends aperiodic data does not match a first resource periodically determined by the first terminal apparatus, and improves a data sending success rate.

In a possible design, the first terminal apparatus determines the first resource for the second terminal apparatus based on first information, where the first information includes a maximum value of a quantity of second terminal apparatuses that are allowed to communicate with the first terminal apparatus; a maximum value of a quantity of second terminal apparatuses for which the first terminal apparatus allows to determine the first resource; and/or a maximum capability value of determining the first resource by the first terminal apparatus.

Based on this possible design, the quantity of second terminal apparatuses for which the first terminal apparatus may determine the first resource is limited, or the maximum capability value of determining the first resource by the first terminal apparatus is limited, so that when the first terminal apparatus determines the first resource for the second terminal apparatus, impact of determining the first resource on power consumption of the first terminal apparatus may be reduced.

In a possible design, the maximum value and/or the maximum capability value are/is determined based on second information including the maximum value and/or the maximum capability value, and the second information may include RRC signaling; the maximum value and/or the maximum capability value are/is predefined; or the maximum value and/or the maximum capability value are/is determined based on capability information of the first terminal apparatus. The RRC signaling may be signaling sent by a base station to the first terminal apparatus, or PC5 RRC signaling sent by another terminal apparatus other than the first terminal apparatus to the first terminal apparatus. Based on this possible design, the first terminal apparatus may determine the maximum value and/or the maximum capability value based on the second information, may determine the maximum value and/or the maximum capability value based on predefinition, or may determine the maximum value and/or the maximum capability value based on the capability information of the first terminal apparatus. This is not limited. A feasible solution is provided for the first terminal apparatus to determine the maximum value and/or the maximum capability value.

In a possible design, the first terminal apparatus receives third information from the second terminal apparatus, where the third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data; and the first terminal apparatus determines the first resource for the second terminal apparatus based on the third information.

Based on this possible design, the first terminal apparatus may further receive the third information that is sent by the second terminal apparatus and that is related to the to-be-sent data of the second terminal apparatus, and determine the first resource only for the second terminal apparatus based on a related service requirement of to-be-sent data in the third information.

In a possible design, the first terminal apparatus sends fourth information including the first resource and second indication information to the second terminal apparatus, where the second indication information indicates that the first resource is the first resource determined by the first terminal apparatus for the second terminal apparatus.

Based on this possible design, the first terminal apparatus sends the fourth information to the second terminal apparatus, so that the second terminal apparatus determines, based on the second indication information, that the first resource is the first resource determined by the first terminal apparatus for the second terminal apparatus, and sends data by using the first resource, or selects, from the first resource, a resource for sending the data, and sends the data by using the resource.

In a possible design, the fourth information is sidelink control information SCI signaling, media access control control element MAC CE signaling, or radio resource control RRC signaling.

Based on this possible design, the RRC signaling may be RRC signaling sent by the first terminal apparatus to the second terminal apparatus by using a PC5 interface, that is, PC5 RRC signaling.

In a possible design, the first terminal apparatus determines, based on a priority of to-be-sent data of the first terminal apparatus or a priority of the to-be-sent data of the second terminal apparatus, priority information corresponding to the first resource, where the first terminal apparatus and/or the second terminal apparatus send/sends data by using the first resource based on a priority indicated by the priority information; and the first terminal apparatus sends the priority information to the second terminal apparatus.

Based on this possible design, the first terminal apparatus may determine, for the first resource, the priority information corresponding to the first resource, so that the terminal apparatus sends the data based on the priority information by using the first resource. This improves a data sending success rate.

In a possible design, the priority information is the priority of the to-be-sent data of the first terminal apparatus; the priority information is the priority of the to-be-sent data of the second terminal apparatus; the priority information is a higher priority between the priority of the to-be-sent data of the first terminal apparatus and the priority of the to-be-sent data of the second terminal apparatus; or the priority information is a lower priority between the priority of the to-be-sent data of the first terminal apparatus and the priority of the to-be-sent data of the second terminal apparatus. Based on this possible design, a feasible solution is provided for the first terminal apparatus to determine the priority information corresponding to the first resource.

In a possible design, a priority of the data is determined based on a packet delay budget PDB of the data, and a smaller PDB of the data indicates a higher priority of the data.

Based on this possible design, the first terminal apparatus may determine the priority of the data based on the PDB of the data, and further determine, based on the priority of the data, the priority information corresponding to the first resource.

In a possible design, the second terminal apparatus is at least one second terminal apparatus. The first terminal apparatus determines, based on a priority of to-be-sent data of the at least one second terminal apparatus, a priority of a resource that is used to send the data and that is determined by the at least one second terminal apparatus from the first resource.

Based on this possible design, the first terminal apparatus may determine, based on a priority of to-be-sent data of each second terminal apparatus, a priority of a resource that is used to send the data and that is determined by each second terminal apparatus from the first resource, so that a second terminal apparatus with a high priority of to-be-sent data preferentially determines, from the first resource, a resource for sending the data. This improves a data sending success rate of the second terminal apparatus while meeting a service requirement of sending data by the second terminal apparatus.

In a possible design, the first terminal apparatus determines the first resource for the second terminal apparatus in a first time period, where the first time period is duration in which the second terminal apparatus sends the data. Alternatively, the first time period is indicated to the first terminal apparatus by using third indication information including the first time period. Alternatively, end time of the first time period is time at which the first terminal apparatus receives, from the second terminal apparatus, fourth indication information that indicates the first terminal apparatus to stop determining the first resource for the second terminal apparatus. Alternatively, end time of the first time period is first time included in fourth indication information. Alternatively, end time of the first time period is time at which the first terminal apparatus sends, to the second terminal apparatus, fifth indication information that indicates the first terminal apparatus to stop determining the first resource for the second terminal apparatus. Alternatively, end time of the first time period is second time included in fifth indication information.

Based on this possible design, the first terminal apparatus may determine the first resource for the second terminal apparatus in the first time period. This reduces power consumption generated by the first terminal apparatus for determining the first resource.

In a possible design, when the second terminal apparatus periodically sends the data, the first terminal apparatus periodically determines, based on a period in which the second terminal apparatus sends the data, the first resource for the second terminal apparatus in the first time period. When the second terminal apparatus aperiodically sends the data, the first terminal apparatus determines the first resource for the second terminal apparatus for one time in the first time period.

Based on this possible design, when the second terminal apparatus periodically sends the data, to meet a service requirement of sending data by the second terminal apparatus, the first terminal apparatus may periodically determine the first resource for the second terminal apparatus based on the period in which the second terminal apparatus sends the data, so that the second terminal apparatus can successfully send the data based on the first resource. When the second terminal apparatus aperiodically sends the data, to reduce power consumption generated by the first terminal apparatus for determining the first resource, the first terminal apparatus may determine the first resource for the second terminal apparatus for one time in the first time period.

In a possible design, the first terminal apparatus sends fifth information to the second terminal apparatus, where the fifth information includes a first resource determined by the first terminal apparatus for the first terminal apparatus and sixth indication information, and the sixth indication information indicates that the first resource included in the fifth information is the first resource determined by the first terminal apparatus for the first terminal apparatus. Based on this possible design, the first terminal apparatus sends the fifth information to the second terminal apparatus, so that the second terminal apparatus determines, based on the sixth indication information, that the first resource is the first resource determined by the first terminal apparatus for the first terminal apparatus. This avoids a case in which the first terminal apparatus fails to send data because the first resource is occupied by the second terminal apparatus. Alternatively, the second terminal apparatus may be notified, by using an indication of the fifth information, that the first terminal apparatus does not determine the first resource for the second terminal apparatus.

According to a second aspect, an embodiment of this application provides a communication apparatus. The communication apparatus may implement a function performed by the first terminal apparatus in the first aspect or the possible designs of the first aspect, and the function may be implemented by hardware executing corresponding software. The hardware or the software includes one or more modules corresponding to the foregoing functions, for example, a receiving module, a processing module, and a sending module.

The receiving module is configured to receive first indication information that is from a second terminal apparatus and that indicates a first terminal apparatus to determine a first resource for the second terminal apparatus.

The processing module is configured to determine, for the second terminal apparatus based on the first indication information, the first resource used by the second terminal apparatus to send data.

The sending module is configured to indicate the first resource to the second terminal apparatus.

For a specific implementation of the communication apparatus, refer to behavior functions of the first terminal apparatus in the resource determining method provided in any one of the first aspect or the possible designs of the first aspect. Based on the communication apparatus according to the second aspect, the first terminal apparatus may determine, for the second terminal apparatus based on the received first indication information that is sent by the second terminal apparatus and that indicates the first terminal apparatus to determine the first resource for the second terminal apparatus, to send the first resource, and indicate the determined first resource to the second terminal apparatus. In comparison with a conventional technology, in this embodiment of this application, the second terminal apparatus may send the first indication information to the first terminal apparatus when the second terminal apparatus needs to send the data, so that the first terminal apparatus determines, based on the first indication information, the first resource used by the second terminal apparatus to send the data. This avoids a case in which a time-frequency resource required when the second terminal apparatus sends aperiodic data does not match a first resource periodically determined by the first terminal apparatus, and improves a data sending success rate.

In a possible design, the processing module is further configured to determine the first resource for the second terminal apparatus based on first information, where the first information includes a maximum value of a quantity of second terminal apparatuses that are allowed to communicate with the first terminal apparatus; a maximum value of a quantity of second terminal apparatuses for which the first terminal apparatus allows to determine the first resource; and/or a maximum capability value of determining the first resource by the first terminal apparatus.

Based on this possible design, the quantity of second terminal apparatuses for which the first terminal apparatus may determine the first resource is limited, or the maximum capability value of determining the first resource by the first terminal apparatus is limited, so that when the first terminal apparatus determines the first resource for the second terminal apparatus, impact of determining the first resource on power consumption of the first terminal apparatus may be reduced.

In a possible design, the processing module is further configured to determine the maximum value and/or the maximum capability value based on second information including the maximum value and/or the maximum capability value, and the second information may include RRC signaling; the maximum value and/or the maximum capability value are/is predefined; or the maximum value and/or the maximum capability value are/is determined based on capability information of the first terminal apparatus. The RRC signaling may be RRC signaling sent by a base station to the first terminal apparatus, or PC5 RRC signaling sent by another terminal apparatus other than the first terminal apparatus to the first terminal apparatus.

Based on this possible design, the first terminal apparatus may determine the maximum value and/or the maximum capability value based on the second information, may determine the maximum value and/or the maximum capability value based on predefinition, or may determine the maximum value and/or the maximum capability value based on the capability information of the first terminal apparatus. This is not limited. A feasible solution is provided for the first terminal apparatus to determine the maximum value and/or the maximum capability value.

In a possible design, the receiving module is further configured to receive third information from the second terminal apparatus, where the third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data. The processing module is further configured to determine the first resource for the second terminal apparatus based on the third information.

Based on this possible design, the first terminal apparatus may further receive the third information that is sent by the second terminal apparatus and that is related to the to-be-sent data of the second terminal apparatus, and determine the first resource only for the second terminal apparatus based on a related requirement of to-be-sent data in the third information.

In a possible design, the sending module is further configured to send fourth information including the first resource and second indication information to the second terminal apparatus, where the second indication information indicates that the first resource is the first resource determined by the first terminal apparatus for the second terminal apparatus. Based on this possible design, the first terminal apparatus sends the fourth information to the second terminal apparatus, so that the second terminal apparatus determines, based on the second indication information, that the first resource is the first resource determined by the first terminal apparatus for the second terminal apparatus, and sends data by using the first resource, or selects, from the first resource, a resource for sending the data, and sends the data by using the resource.

In a possible design, the fourth information is sidelink control information SCI signaling, media access control control element MAC CE signaling, or radio resource control RRC signaling.

Based on this possible design, the RRC signaling may be RRC signaling sent by the first terminal apparatus to the second terminal apparatus by using a PC5 interface, that is, PC5 RRC signaling.

In a possible design, the processing module is further configured to determine, based on a priority of to-be-sent data of the first terminal apparatus or a priority of the to-be-sent data of the second terminal apparatus, priority information corresponding to the first resource, where the first terminal apparatus and/or the second terminal apparatus send/sends data by using the first resource based on a priority indicated by the priority information; and the first terminal apparatus sends the priority information to the second terminal apparatus.

Based on this possible design, the first terminal apparatus may determine, for the first resource, the priority information corresponding to the first resource, so that the terminal apparatus sends the data based on the priority information by using the first resource. This improves a data sending success rate.

In a possible design, the priority information is the priority of the to-be-sent data of the first terminal apparatus; the priority information is the priority of the to-be-sent data of the second terminal apparatus; the priority information is a higher priority between the priority of the to-be-sent data of the first terminal apparatus and the priority of the to-be-sent data of the second terminal apparatus; or the priority information is a lower priority between the priority of the to-be-sent data of the first terminal apparatus and the priority of the to-be-sent data of the second terminal apparatus. Based on this possible design, a feasible solution is provided for the first terminal apparatus to determine the priority information corresponding to the first resource.

In a possible design, a priority of the data is determined based on a packet delay budget PDB of the data, and a smaller PDB of the data indicates a higher priority of the data.

Based on this possible design, the first terminal apparatus may determine the priority of the data based on the PDB of the data, and further determine, based on the priority of the data, the priority information corresponding to the first resource.

In a possible design, the second terminal apparatus is at least one second terminal apparatus, and the processing module is further configured to determine, based on a priority of to-be-sent data of the at least one second terminal apparatus, a priority of a resource that is used to send the data and that is determined by the at least one second terminal apparatus from the first resource.

Based on this possible design, the first terminal apparatus may determine, based on a priority of to-be-sent data of each second terminal apparatus, a priority of a resource that is used to send the data and that is determined by each second terminal apparatus from the first resource, so that a second terminal apparatus with a high priority of to-be-sent data preferentially determines, from the first resource, a resource for sending the data. This improves a data sending success rate of the second terminal apparatus while meeting a service requirement of sending data by the second terminal apparatus.

In a possible design, the processing module is further configured to determine the first resource for the second terminal apparatus in a first time period, where the first time period is duration in which the second terminal apparatus sends the data. Alternatively, the first time period is indicated to the first terminal apparatus by using third indication information including the first time period. Alternatively, end time of the first time period is time at which the first terminal apparatus receives, from the second terminal apparatus, fourth indication information that indicates the first terminal apparatus to stop determining the first resource for the second terminal apparatus. Alternatively, end time of the first time period is first time included in fourth indication information. Alternatively, end time of the first time period is time at which the first terminal apparatus sends, to the second terminal apparatus, fifth indication information that indicates the first terminal apparatus to stop determining the first resource for the second terminal apparatus. Alternatively, end time of the first time period is second time included in fifth indication information.

Based on this possible design, the first terminal apparatus may determine the first resource for the second terminal apparatus in the first time period. This reduces power consumption generated by the first terminal apparatus for determining the first resource.

In a possible design, when the second terminal apparatus periodically sends the data, the processing module is further configured to periodically determine, based on a period in which the second terminal apparatus sends the data, the first resource for the second terminal apparatus in the first time period. When the second terminal apparatus aperiodically sends the data, the processing module is further configured to determine the first resource for the second terminal apparatus for one time in the first time period.

Based on this possible design, when the second terminal apparatus periodically sends the data, to meet a service requirement of sending data by the second terminal apparatus, the first terminal apparatus may periodically determine the first resource for the second terminal apparatus based on the period in which the second terminal apparatus sends the data, so that the second terminal apparatus can successfully send the data based on the first resource. When the second terminal apparatus aperiodically sends the data, to reduce power consumption generated by the first terminal apparatus for determining the first resource, the first terminal apparatus may determine the first resource for the second terminal apparatus for one time in the first time period.

In a possible design, the sending module is further configured to send fifth information to the second terminal apparatus, where the fifth information includes a first resource determined by the first terminal apparatus for the first terminal apparatus and sixth indication information, and the sixth indication information indicates that the first resource included in the fifth information is the first resource determined by the first terminal apparatus for the first terminal apparatus.

Based on this possible design, the first terminal apparatus sends the fifth information to the second terminal apparatus, so that the second terminal apparatus determines, based on the sixth indication information, that the first resource is the first resource determined by the first terminal apparatus for the first terminal apparatus. This avoids a case in which the first terminal apparatus fails to send data because the first resource is occupied by the second terminal apparatus. Alternatively, the second terminal apparatus may be notified, by using an indication of the fifth information, that the first terminal apparatus does not determine the first resource for the second terminal apparatus.

According to a third aspect, a communication apparatus is provided. The communication apparatus may be a first terminal apparatus or a chip or a system on chip in the first terminal apparatus. The communication apparatus may implement a function performed by the first terminal apparatus in the foregoing aspects or possible designs, and the function may be implemented by hardware. In a possible design, the communication apparatus may include a transceiver and a processor. The transceiver and the processor may be configured to support the communication apparatus in implementing the function in any one of the first aspect or the possible designs of the first aspect. For example, the transceiver may be configured to receive first indication information that is from a second terminal apparatus and that indicates a first terminal apparatus to determine a first resource for the second terminal apparatus. The processor may be configured to determine, for the second terminal apparatus based on the first indication information, the first resource used by the second terminal apparatus to send data. The transceiver may be further configured to indicate the first resource to the second terminal apparatus. In another possible design, the communication apparatus may further include a memory. The memory is configured to store computer-executable instructions and data that are necessary for the communication apparatus. When the communication apparatus runs, the processor executes the computer-executable instructions stored in the memory, the communication apparatus is enabled to perform the resource determining method according to any one of the first aspect or the possible designs of the first aspect.

For a specific implementation of the communication apparatus, refer to behavior functions of the first terminal apparatus in the resource determining method provided in any one of the first aspect or the possible designs of the first aspect.

According to a fourth aspect, a communication apparatus is provided, where the communication apparatus includes one or more processors and one or more memories, the one or more memories are coupled to the one or more processors, the one or more memories are configured to store computer program code or computer instructions, and when the one or more processors execute the computer instructions, the communication apparatus is enabled to perform the resource determining method according to any one of the first aspect or the possible designs of the first aspect.

According to a fifth aspect, a computer-readable storage medium is provided. The computer-readable storage medium stores computer instructions or a program. When the computer instructions or the program are/is run on a computer, the computer is enabled to perform the resource determining method according to any one of the first aspect or the possible designs of the first aspect.

According to a sixth aspect, a computer program product including instructions is provided. When the computer program product is run on a computer, the computer is enabled to perform the resource determining method according to any one of the first aspect or the possible designs of the first aspect.

According to a seventh aspect, a chip system is provided, where the chip system includes one or more processors and one or more memories, the one or more memories are coupled to the one or more processors, the one or more memories store computer program code or computer instructions, and when the one or more processors execute the computer program code or the computer instructions, the chip system is enabled to perform the resource determining method according to any one of the first aspect or the possible designs of the first aspect.

For technical effects brought by any one of the designs of the third aspect to the seventh aspect, refer to the technical effects brought by any one of the possible designs of the first aspect and the second aspect. Details are not described again.

According to an eighth aspect, a resource determining method is provided. The method includes: A second terminal apparatus sends, to a first terminal apparatus, first indication information that indicates the first terminal apparatus to determine a first resource for the second terminal apparatus; and the second terminal apparatus receives the first resource that is from the first terminal apparatus and that is used by the second terminal apparatus to send data. Based on the eighth aspect, in this embodiment of this application, the second terminal apparatus may send the first indication information to the first terminal apparatus when the second terminal apparatus needs to send the data, so that the first terminal apparatus determines, based on the first indication information, the first resource used by the second terminal apparatus to send the data, and sends the first resource to the second terminal apparatus. This avoids a case in which a time-frequency resource required when the second terminal apparatus sends aperiodic data does not match a first resource periodically determined by the first terminal apparatus, and improves a data sending success rate.

In a possible design, when a first measurement result of the second terminal apparatus is less than a preset threshold, the second terminal apparatus sends the first indication information to the first terminal apparatus, where the first measurement result is a result of network quality measured by the second terminal apparatus.

Based on this possible design, when the second terminal apparatus is in an environment in which network quality is poor, the second terminal apparatus cannot determine the first resource according to a resource sensing mechanism or a partial resource sensing mechanism, and the second terminal apparatus may send the first indication information to the first terminal apparatus, so that the first terminal apparatus determines the first resource for the second terminal apparatus.

In a possible design, the second terminal apparatus sends third information to the first terminal apparatus, where the third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data. Based on this possible design, the second terminal apparatus may send the third information related to the to-be-sent data of the second terminal to the first terminal apparatus, so that the first terminal apparatus determines the first resource only for the second terminal apparatus based on a related service requirement of to-be-sent data in the third information.

In a possible design, the second terminal apparatus receives, from the first terminal, fourth information that includes the first resource and second indication information, where the second indication information indicates that the first resource is the first resource determined by the first terminal apparatus for the second terminal apparatus.

Based on this possible design, the second terminal apparatus may determine, based on the fourth information sent by the first terminal apparatus, that the first resource is a first resource determined by the first terminal apparatus for the second terminal apparatus, and send data by using the first resource; or select, from the first resource, a resource for sending the data, and send the data by using the resource.

In a possible design, the fourth information is sidelink control information SCI signaling, media access control control element MAC CE signaling, or radio resource control RRC signaling.

Based on this possible design, the RRC signaling may be RRC signaling sent by the first terminal apparatus to the second terminal apparatus by using a PC5 interface, that is, PC5 RRC signaling.

In a possible design, the second terminal apparatus receives priority information corresponding to the first resource from the first terminal apparatus, where the priority information is determined based on a priority of to-be-sent data of the first terminal apparatus or a priority of the to-be-sent data of the second terminal apparatus, and the first terminal apparatus and/or the second terminal apparatus send/sends data by using the first resource based on a priority indicated by the priority information.

Based on this possible design, the second terminal apparatus sends the data by using the first resource based on the priority indicated by the priority information, to improve a data sending success rate.

In a possible design, the priority information is the priority of the to-be-sent data of the first terminal apparatus; the priority information is the priority of the to-be-sent data of the second terminal apparatus; the priority information is a higher priority between the priority of the to-be-sent data of the first terminal apparatus and the priority of the to-be-sent data of the second terminal apparatus; or the priority information is a lower priority between the priority of the to-be-sent data of the first terminal apparatus and the priority of the to-be-sent data of the second terminal apparatus. In a possible design, a priority of the data is determined based on a packet delay budget PDB of the data, and a smaller PDB of the data indicates a higher priority of the data.

Based on this possible design, the priority of the data may be determined based on the PDB of the data, and then the priority information corresponding to the first resource is determined based on the priority of the data.

In a possible design, the second terminal apparatus receives the first resource determined by the first terminal apparatus for the second terminal apparatus in a first time period, where the first time period is duration in which the second terminal apparatus sends the data. Alternatively, the first time period is indicated to the first terminal apparatus by using third indication information, where the third indication information includes the first time period. Alternatively, end time of the first time period is time at which the second terminal apparatus sends fourth indication information to the first terminal apparatus. Alternatively, end time of the first time period is first time included in fourth indication information. The fourth indication information indicates the first terminal apparatus to stop determining the first resource for the second terminal apparatus. When the fourth indication information includes the first time, the fourth indication information further indicates the first terminal apparatus to stop, at the first time, determining the first resource for the second terminal apparatus. Alternatively, end time of the first time period is time at which the second terminal receives fifth indication information from the first terminal apparatus. Alternatively, end time of the first time period is second time included in fifth indication information. The fifth indication information indicates the first terminal apparatus to stop determining the first resource for the second terminal apparatus. When the fifth indication information includes the second time, the fifth indication information further indicates the first terminal apparatus to stop, at the second time, determining the first resource for the second terminal apparatus.

Based on this possible design, the second terminal apparatus may receive, in the first time period, the first resource determined by the first terminal apparatus for the second terminal apparatus, so that power consumption generated by the first terminal apparatus for determining the first resource is reduced while meeting a service requirement for sending data by the second terminal apparatus.

In a possible design, when the second terminal apparatus periodically sends the data, the second terminal apparatus periodically receives, based on a period in which the second terminal apparatus sends the data, the first resource determined by the first terminal apparatus for the second terminal apparatus in the first time period. When the second terminal apparatus aperiodically sends the data, the second terminal apparatus receives, the first resource determined by the first terminal apparatus for the second terminal apparatus for one time in the first period.

Based on this possible design, when the second terminal apparatus periodically sends the data, to meet a service requirement of sending data by the second terminal apparatus, the first terminal apparatus may periodically determine the first resource for the second terminal apparatus based on the period in which the second terminal apparatus sends the data, so that the second terminal apparatus can successfully send the data based on the first resource. When the second terminal apparatus aperiodically sends the data, to reduce power consumption generated by the first terminal apparatus for determining the first resource, the first terminal apparatus may determine the first resource for the second terminal apparatus for one time in the first time period.

In a possible design, the second terminal apparatus receives, from the first terminal apparatus, fifth information that includes a first resource determined by the first terminal apparatus for the first terminal apparatus and sixth indication information, and the sixth indication information indicates that the first resource included in the fifth information is the first resource determined by the first terminal apparatus for the first terminal apparatus.

Based on this possible design, the second terminal apparatus may determine, based on the fifth information sent by the first terminal apparatus, that the first resource is a first resource determined by the first terminal apparatus for the first terminal apparatus. This avoids a case in which the first terminal apparatus fails to send data because the first resource is occupied by the second terminal apparatus.

According to a ninth aspect, an embodiment of this application provides a communication apparatus. The communication apparatus may implement a function performed by the second terminal apparatus in the eighth aspect or the possible designs of the eighth aspect, and the function may be implemented by hardware executing corresponding software. The hardware or the software includes one or more modules corresponding to the foregoing functions, for example, a sending module and a receiving module.

The sending module is configured to send, to a first terminal apparatus, first indication information that indicates the first terminal apparatus to determine a first resource for a second terminal apparatus.

The receiving module is configured to receive, from the first terminal apparatus, the first resource used by the second terminal apparatus to send data.

For a specific implementation of the communication apparatus, refer to behavior functions of the second terminal apparatus in the resource determining method provided in any one of the eighth aspect or the possible designs of the eighth aspect. Based on the communication apparatus according to the ninth aspect, the second terminal apparatus may send the first indication information to the first terminal apparatus when the second terminal apparatus needs to send data, so that the first terminal apparatus determines, based on the first indication information, the first resource used by the second terminal apparatus to send the data. This avoids a case in which a time-frequency resource required when the second terminal apparatus sends aperiodic data does not match a first resource periodically determined by the first terminal apparatus, and improves a data sending success rate.

In a possible design, the sending module is configured to: when a first measurement result of the second terminal apparatus is less than a preset threshold, send the first indication information to the first terminal apparatus, where the first measurement result is a result of network quality measured by the second terminal apparatus.

Based on this possible design, when the second terminal apparatus is in an environment in which network quality is poor, the second terminal apparatus cannot determine the first resource according to a resource sensing mechanism or a partial resource sensing mechanism, and the second terminal apparatus may send the first indication information to the first terminal apparatus, so that the first terminal apparatus determines the first resource for the second terminal apparatus.

In a possible design, the sending module is further configured to send third information to the first terminal apparatus, where the third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data.

Based on this possible design, the second terminal apparatus may send the third information related to the to-be-sent data of the second terminal to the first terminal apparatus, so that the first terminal apparatus determines the first resource only for the second terminal apparatus based on a related service requirement of to-be-sent data in the third information.

In a possible design, the receiving module is further configured to receive, from the first terminal, fourth information that includes the first resource and second indication information, where the second indication information indicates that the first resource is the first resource determined by the first terminal apparatus for the second terminal apparatus. Based on this possible design, the second terminal apparatus may determine, based on the fourth information sent by the first terminal apparatus, that the first resource is a first resource determined by the first terminal apparatus for the second terminal apparatus, and send data by using the first resource; or select, from the first resource, a resource for sending the data, and send the data by using the resource.

In a possible design, the fourth information is sidelink control information SCI signaling, media access control control element MAC CE signaling, or radio resource control RRC signaling.

Based on this possible design, the RRC signaling may be RRC signaling sent by the first terminal apparatus to the second terminal apparatus by using a PC5 interface, that is, PC5 RRC signaling.

In a possible design, the receiving module is further configured to receive, from the first terminal apparatus, priority information corresponding to the first resource, where the priority information is determined based on a priority of to-be-sent data of the first terminal apparatus or a priority of the to-be-sent data of the second terminal apparatus, and the first terminal apparatus and/or the second terminal apparatus send/sends data by using the first resource based on a priority indicated by the priority information.

Based on this possible design, the second terminal apparatus sends the data by using the first resource based on the priority indicated by the priority information, to improve a data sending success rate.

In a possible design, the priority information is the priority of the to-be-sent data of the first terminal apparatus; the priority information is the priority of the to-be-sent data of the second terminal apparatus; the priority information is a higher priority between the priority of the to-be-sent data of the first terminal apparatus and the priority of the to-be-sent data of the second terminal apparatus; or the priority information is a lower priority between the priority of the to-be-sent data of the first terminal apparatus and the priority of the to-be-sent data of the second terminal apparatus. In a possible design, a priority of the data is determined based on a packet delay budget PDB of the data, and a smaller PDB of the data indicates a higher priority of the data.

Based on this possible design, the priority of the data may be determined based on the PDB of the data, and then the priority information corresponding to the first resource is determined based on the priority of the data.

In a possible design, the receiving module is further configured to receive the first resource determined by the first terminal apparatus for the second terminal apparatus in a first time period, where the first time period is duration in which the second terminal apparatus sends data. Alternatively, the first time period is indicated to the first terminal apparatus by using third indication information, where the third indication information includes the first time period.

Alternatively, end time of the first time period is time at which the second terminal apparatus sends fourth indication information to the first terminal apparatus. Alternatively, end time of the first time period is first time included in fourth indication information. The fourth indication information indicates the first terminal apparatus to stop determining the first resource for the second terminal apparatus. When the fourth indication information includes the first time, the fourth indication information further indicates the first terminal apparatus to stop, at the first time, determining the first resource for the second terminal apparatus. Alternatively, end time of the first time period is time at which the second terminal receives fifth indication information from the first terminal apparatus. Alternatively, end time of the first time period is second time included in fifth indication information. The fifth indication information indicates the first terminal apparatus to stop determining the first resource for the second terminal apparatus. When the fifth indication information includes the second time, the fifth indication information further indicates the first terminal apparatus to stop, at the second time, determining the first resource for the second terminal apparatus. Based on this possible design, the second terminal apparatus may receive, in the first time period, the first resource determined by the first terminal apparatus for the second terminal apparatus, so that power consumption generated by the first terminal apparatus for determining the first resource is reduced while meeting a service requirement for sending data by the second terminal apparatus.

In a possible design, the receiving module is further configured to: when the second terminal apparatus periodically sends the data, periodically receive, based on a period in which the second terminal apparatus sends the data, the first resource determined by the first terminal apparatus for the second terminal apparatus in the first time period. The receiving module is further configured to: when the second terminal apparatus aperiodically sends the data, receive the first resource determined by the first terminal apparatus for the second terminal apparatus for one time in the first time period.

Based on this possible design, when the second terminal apparatus periodically sends the data, to meet a service requirement of sending data by the second terminal apparatus, the first terminal apparatus may periodically determine the first resource for the second terminal apparatus based on the period in which the second terminal apparatus sends the data, so that the second terminal apparatus can successfully send the data based on the first resource. When the second terminal apparatus aperiodically sends the data, to reduce power consumption generated by the first terminal apparatus for determining the first resource, the first terminal apparatus may determine the first resource for the second terminal apparatus for one time in the first time period.

In a possible design, the receiving module is further configured to receive, from the first terminal apparatus, fifth information that includes a first resource determined by the first terminal apparatus for the first terminal apparatus and sixth indication information, and the sixth indication information indicates that the first resource included in the fifth information is the first resource determined by the first terminal apparatus for the first terminal apparatus.

Based on this possible design, the second terminal apparatus may determine, based on the fifth information sent by the first terminal apparatus, that the first resource is a first resource determined by the first terminal apparatus for the first terminal apparatus. This avoids a case in which the first terminal apparatus fails to send data because the first resource is occupied by the second terminal apparatus.

According to a tenth aspect, a communication apparatus is provided. The communication apparatus may be a second terminal apparatus or a chip or a system on chip in the second terminal apparatus. The communication apparatus may implement a function performed by the second terminal apparatus in the foregoing aspects or possible designs, and the function may be implemented by hardware. In a possible design, the communication apparatus may include a transceiver. The transceiver may be configured to support the communication apparatus in implementing the function in any one of the eighth aspect or the possible designs of the eighth aspect. For example, the transceiver may be configured to send, to the first terminal apparatus, first indication information that indicates the first terminal apparatus to determine a first resource for the second terminal apparatus; and the transceiver may be further configured to receive, from the first terminal apparatus, the first resource used by the second terminal apparatus to send data. In another possible design, the communication apparatus may further include a memory. The memory is configured to store computer-executable instructions and data that are necessary for the communication apparatus. When the communication apparatus runs, the processor executes the computer-executable instructions stored in the memory, the communication apparatus is enabled to perform source determining method according to any one of the eighth aspect or the possible designs of the eighth aspect.

For a specific implementation of the communication apparatus, refer to behavior functions of the second terminal apparatus in the resource determining method provided in any one of the eighth aspect or the possible designs of the eighth aspect.

According to an eleventh aspect, a communication apparatus is provided, where the communication apparatus includes one or more processors and one or more memories, the one or more memories are coupled to the one or more processors, the one or more memories are configured to store computer program code or computer instructions, and when the one or more processors execute the computer instructions, the communication apparatus is enabled to perform the resource determining method according to any one of the eighth aspect or the possible designs of the eighth aspect.

According to a twelfth aspect, a computer-readable storage medium is provided. The computer-readable storage medium stores computer instructions or a program. When the computer instructions or the program are/is run on a computer, the computer is enabled to perform the resource determining method according to any one of the eighth aspect or the possible designs of the eighth aspect.

According to a thirteenth aspect, a computer program product including instructions is provided. When the computer program product is run on a computer, the computer is enabled to perform the resource determining method according to any one of the eighth aspect or the possible designs of the eighth aspect.

According to a fourteenth aspect, a chip system is provided, where the chip system includes one or more processors and one or more memories, the one or more memories are coupled to the one or more processors, the one or more memories store computer program code or computer instructions, and when the one or more processors execute the computer program code or the computer instructions, the chip system is enabled to perform the resource determining method according to any one of the eighth aspect or the possible designs of the eighth aspect.

For technical effects brought by any one of the designs of the tenth aspect to the fourteenth aspect, refer to the technical effects brought by any one of the possible designs of the eighth aspect and the ninth aspect. Details are not described again.

According to a fifteenth aspect, a communication system is provided. The communication system includes the communication apparatus according to any one of the second aspect and the third aspect and the communication apparatus according to any one of the ninth aspect and the tenth aspect.

**BRIEF DESCRIPTION OF DRAWINGS**

FIG. la is a schematic diagram of a resource sensing mechanism according to an embodiment of this application;
FIG. 1b is a schematic diagram of a partial resource sensing mechanism according to an embodiment of this application;
FIG. 1c is a schematic diagram of a communication system according to an embodiment of this application;
FIG. 2 is a diagram of a composition structure of a communication apparatus according to an embodiment of this application;
FIG. 3 is a flowchart of a resource determining method according to an embodiment of this application;
FIG. 4 is a flowchart of a resource determining method according to an embodiment of this application;
FIG. 5 is a schematic composition diagram of a communication apparatus according to an embodiment of this application; and
FIG. 6 is a schematic composition diagram of a communication apparatus according to an embodiment of this application.

**DESCRIPTION OF EMBODIMENTS**

Before embodiments of this application are described, terms used in embodiments of this application are described as follows.

In a communication system, a terminal apparatus may determine, in a first resource allocation manner or a second resource allocation manner described below, a resource used for to-be-sent data. The resource may include a physical transmission resource such as a time domain resource or a frequency domain resource.

In the first resource allocation manner, a centralized resource control method is used, which is applicable to an application scenario with network coverage. In this manner, a resource may be allocated by a central control device (for example, a base station or a relay station), and allocated, in a scheduling manner, to a terminal apparatus that has to-be-sent data. The first resource allocation manner may be a first mode of a new radio (new radio, NR) vehicle to everything (vehicle to everything, V2X) communication system, or may be a third mode of a long term evolution (long term evolution, LTE) V2X communication system. In the first mode of the NR V2X communication system, the central control device schedules a resource for one time. In the third mode of the LTE V2X communication system, the terminal apparatus may use a resource scheduled by the central control device for a plurality of times.

In the second resource allocation, a contention-based distributed resource multiplexing method is used, and a terminal apparatus that has to-be-sent data contends for, from a data resource pool, a resource for sending the data. The second resource allocation manner is applicable to an application scenario with network coverage or an application scenario without network coverage. In the application scenario with network coverage, the data resource pool may be an entire block of resources allocated by a base station, and all terminal apparatuses contend for a small block of resources in the entire block of resources. In the application scenario without network coverage, the data resource pool may be a predefined resource, and all terminal apparatuses contend for a resource from the predefined resource. The second resource allocation manner may be a second mode of the NR V2X communication system, or may be a fourth mode of the LTE V2X communication system. In the second mode of the NR V2X communication system, a terminal apparatus that has to-be-sent data may randomly select a resource from the data resource pool. In the fourth mode of the LTE V2X communication system, before the terminal apparatus selects a resource, the terminal apparatus that has to-be-sent data may determine an available resource in the data resource pool according to a resource sensing (sensing) mechanism. For example, the terminal apparatus may determine which resource is occupied and which resource is not occupied in the data resource pool, determine an unoccupied resource as an available resource, and then selects a resource for sending the data from the available resource.

Resource sensing (sensing) mechanism: The resource sensing mechanism includes two sensing manners: energy detection and sidelink control information (sidelink control information, SCI) decoding.

Energy detection: A terminal apparatus performs energy measurement (for example, measures reference signal received power (reference signal receiving power, RSRP), or measures reference signal received quality (reference signal receiving quality, RSRQ)) on each resource in the resource pool. If a measurement result exceeds a preset threshold, it may be considered that a corresponding resource is occupied. If the measurement result does not exceed the preset threshold, it is considered that the corresponding resource is an available resource.

SCI decoding: A terminal apparatus may receive, in a sidelink control channel (physical sidelink control channel, PSCCH) resource pool, SCI sent by another terminal apparatus, and decode the SCI. Because the SCI includes resource information of to-be-sent data corresponding to the SCI, the resource information may indicate a resource occupied by the to-be-sent data in a data (data) resource pool, and the terminal apparatus may learn, by decoding the SCI, a resource occupied by the another terminal apparatus in the data resource pool, to determine which resource is occupied and which resource is an available resource in the data resource pool.

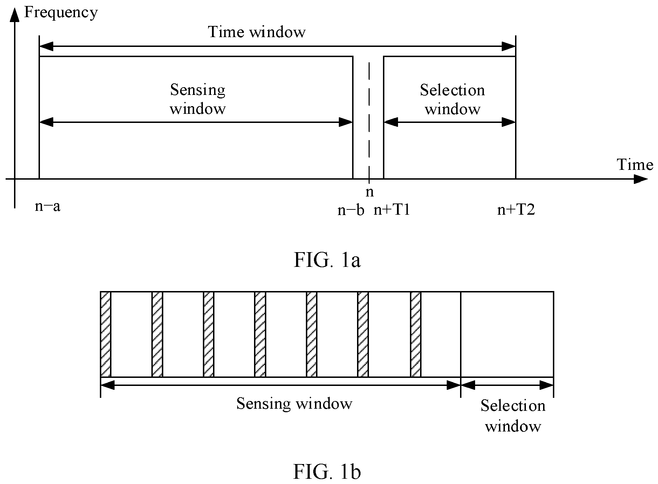

The foregoing energy detection and SCI decoding are performed, so that all resources in a resource pool may be sensed, and an available resource may be selected in a time window of a fixed size. FIG. 1a shows a time window of a fixed size. As shown in FIG. 1a, the time window includes a time point n, a sensing window (sensing window), and a selection window (selection window). The time point n refers to a slot in which a higher layer (higher layer) of the terminal apparatus triggers, for sending of a physical sidelink control channel (physical sidelink control channel, PSCCH) and/or a physical sidelink shared channel (physical sidelink shared channel, PSSCH), the terminal apparatus to select a resource. The sensing window (sensing window) is a window used when a terminal apparatus senses utilization of a time-frequency resource around the terminal apparatus. A slot range of the sensing window is [n-a, n b], where a is a value calculated according to a higher-layer parameter, and b is a value defined in a standard, a value obtained according to a capability or an implementation of the terminal apparatus, or a value calculated according to a higher-layer parameter. The selection window (selection window) refers to a window used when a terminal apparatus selects a candidate single-slot resource (candidate single-slot resource) based on a sensing result in the sensing window. A slot range of the selection window is [n+T1, n+T2], where T1 is a value obtained according to an implementation of the terminal apparatus, and T2 is a value obtained according to a higher-layer parameter or an implementation of the terminal apparatus.

It should be noted that the slot is a time unit used when uplink information, downlink information, or sidelink information is transmitted in a communication system. One slot may include a plurality of mini-slots, and one mini-slot may include one or more orthogonal frequency division multiplexing (orthogonal frequency division multiplexing, OFDM) symbols. Optionally, the slot or the mini-slot may be a minimum scheduling unit used when the uplink information, the downlink information, or the sidelink information is transmitted in time domain.

Further, to reduce power consumption of the terminal apparatus, the terminal apparatus may further sense some resources in the resource pool in the time window of the fixed size, and select an available resource from the some resources. The sensing mechanism may be referred to as a partial resource sensing (partial sensing) mechanism. As shown in FIG. 1b, a selection window of the partial resource sensing mechanism may be a part of the selection window [n+T1, n+T2] of the resource sensing mechanism shown in FIG. 1a. The selection window occupies a minimum of Y subframes, where Y is configured by a base station. It is assumed that a subframe location in the selection window is $t_y^{SL}$ , and y represents a subframe number. According to the subframe y, it may be inferred that a subframe location for performing resource sensing in the sensing window is $t_{y-k \times P_{step}}^{SL}$ , as shown in a shadow part in FIG. 1b, where k is a bit string indicated by a higher-layer parameter, and has a value of 0 and 1. If resource sensing needs to be performed, k is configured as 1. If the resource sensing does not need to be performed, k is configured as 0. $P_{step}$ represents a step for performing the resource sensing, P may correspond to different values based on different uplink-downlink configurations (uplink-downlink configuration, UL/DL configuration) of time division duplex (time division duplex, TDD), or P may correspond to different values based on different UL/DL configurations of frequency division duplex (frequency division duplex, FDD). The UL/DL configuration of TDD is used as an example, and $P_{step}$ may be a value in the following Table 1:

**Table 1**

|  | $P_{step}$ |
| --- | --- |
| UL/DL configuration 0 | 60 |
| UL/DL configuration 1 | 40 |
| UL/DL configuration 2 | 20 |
| UL/DL configuration 3 | 30 |
| UL/DL configuration 4 | 20 |
| UL/DL configuration 5 | 10 |
| UL/DL configuration 6 or others | 50 |
|  | 100 |

It can be learned from the foregoing that the terminal apparatus may determine an available resource based on a resource sensing mechanism, or may determine the available resource based on a partial resource sensing mechanism. The terminal apparatus may exclude all occupied resources in the data resource pool through SCI decoding, and determine a remaining unoccupied resource as the available resource. The terminal apparatus may further perform energy detection on all occupied resources, determine a resource whose measurement result is less than a preset threshold as an available resource, and determine a resource whose measurement result value is greater than the preset threshold as an unavailable resource. Available resources obtained through SCI decoding and available resources obtained through energy detection are determined as available resources of the terminal apparatus, that is, first resources or candidate resources of the first resources described in this embodiment of this application. The terminal apparatus may determine all the available resources as a first resource, or may select some resources from all the available resources as a first resource. The some resources may be contiguous or non-contiguous resources. If a determined quantity of all the available resources is less than 20% of all resources in the resource pool, a currently preset threshold may be increased at an interval of a step of 3 dB, and energy detection is performed again until a total quantity of all the available resources is greater than or equal to 20% of all resources in the resource pool.

When the terminal apparatus cannot support the resource sensing mechanism, or the first resource determined by using the resource sensing mechanism is inaccurate, for example, when power of the terminal apparatus is excessively low and a power saving operation needs to be performed, when the terminal apparatus cannot obtain the first resource by using the resource sensing mechanism due to a hidden node problem, when the terminal apparatus is in a tunnel environment or a mountainous environment and a channel status of the terminal apparatus is poor, or when the terminal apparatus is outside network coverage, the terminal apparatus may determine, based on a first resource determined by an auxiliary terminal apparatus, a resource for sending data. The auxiliary terminal apparatus may be a terminal apparatus that establishes a communication connection to the terminal apparatus, or may be a roadside unit (road side unit, RSU). The RSU may be an RSU of a terminal type that is disposed on a roadside and in a non-moving state; or may be an RSU of a base station type that communicates with a second terminal apparatus and provides timing synchronization and resource scheduling for the second terminal apparatus. In a possible implementation, the auxiliary terminal apparatus may periodically determine the first resource based on the resource sensing mechanism or the partial resource sensing mechanism, and send the first resource to the terminal apparatus, so that the terminal apparatus selects, from the first resource, a time-frequency resource used by the terminal apparatus to send data. The terminal apparatus supports aperiodic data sending or periodic data sending. However, when the terminal apparatus needs to send aperiodic data, a time-frequency resource that is selected by the terminal apparatus from the first resource in an aperiodic manner and that is used by the terminal apparatus to send data may be occupied by another terminal apparatus. Consequently, the first resource determined by the auxiliary terminal apparatus cannot match the time-frequency resource required by the aperiodic data, and a data sending failure occurs.

To resolve this problem, an embodiment of this application provides a resource determining method. A first terminal apparatus may determine, for a second terminal apparatus based on received first indication information that is sent by the second terminal apparatus and that indicates the first terminal apparatus to determine a first resource for the second terminal apparatus, the first resource used by the second terminal apparatus to send data; and indicate the determined first resource to the second terminal apparatus. In this embodiment of this application, the second terminal apparatus may send the first indication information to the first terminal apparatus when the second terminal apparatus needs to send data, so that the first terminal apparatus determines, based on the first indication information, the first resource used by the second terminal apparatus to send the data. This avoids a case in which a time-frequency resource required when the second terminal apparatus sends aperiodic data does not match a first resource periodically determined by the first terminal apparatus, and improves a data sending success rate.

The following describes implementations of this embodiment of this application in detail with reference to accompanying drawings in this specification.

The resource determining method provided in this embodiment of this application may be applied to any communication system. The communication system may be a 3rd Generation Partnership Project (third generation partnership project, 3GPP) communication system, for example, an LTE communication system or an LTE V2X communication system, or may be a 5th Generation (fifth generation, 5G) mobile communication system, an NR communication system, an NR V2X communication system, or another next-generation communication system, or may be a non-3GPP communication system. This is not limited.

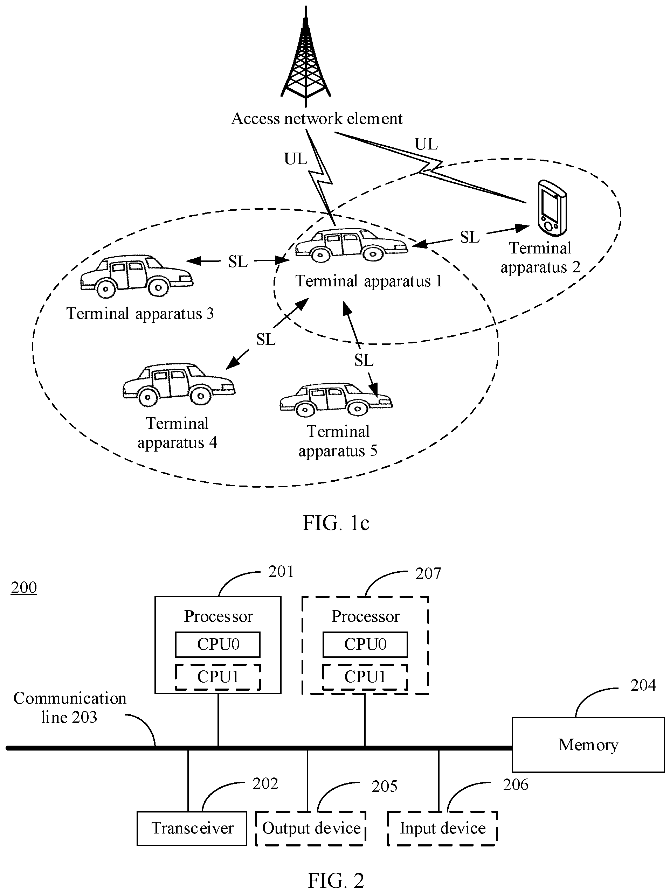

The resource determining method provided in this embodiment of this application may be applied to various communication scenarios, for example, may be applied to one or more of the following communication scenarios: enhanced mobile broadband (enhanced mobile broadband, eMBB), ultra-reliable low-latency communication (ultra reliable low latency communication, URLLC), machine type communication (machine type communication, MTC), massive machine type communication (massive machine type communications, mMTC), D2D, V2X, and Internet of Things (internet of things, IoT), unicast communication between terminal apparatuses, and multicast communication used by a plurality of terminal apparatuses located in a same multicast group. The following uses FIG. 1c as an example to describe the resource determining method provided in an embodiment of this application.

FIG. 1c is a schematic diagram of a communication system according to an embodiment of this application. As shown in FIG. 1c, the communication system may include a plurality of terminal apparatuses, and may further include an access network element.

In FIG. 1c, the terminal apparatus may perform sidelink communication or D2D communication with another terminal apparatus over a sidelink (sidelink, SL) based on a proximity-based services communication 5 (proximity-based services communication 5, PC5) interface, and send data to the another terminal apparatus over the SL, for example, send sidelink data to the another terminal apparatus over the SL by using a physical sidelink shared channel (physical sidelink share channel, PSSCH), or send, to the another terminal apparatus, sidelink feedback control information (sidelink feedback control information, SFCI) corresponding to received sidelink data over the SL by using a physical sidelink feedback channel (physical sidelink feedback channel, PSFCH). The D2D communication may include V2V, V2P, V2I, communication between unmanned aerial vehicles (unmanned aerial vehicle, UAV) and the like. This is not limited. It should be noted that in this embodiment of this application, the SL may also be referred to as a direct link, a PC5 interface link, or the like. This is not limited.

The terminal apparatuses in FIG. 1c may be located in cell coverage of the access network element. The terminal apparatuses may perform air-interface communication with the access network element over an uplink (uplink, UL). In a UL direction, the terminal apparatuses send data to the access network element. In a DL direction, the access network element processes the data, and then sends the processed data to the terminal apparatuses by using an air interface.

A terminal (terminal) apparatus in FIG. 1c may be user equipment (user equipment, UE), a mobile station (mobile station, MS), a mobile terminal (mobile terminal, MT), or the like. Specifically, the terminal apparatus in FIG. 1c may be a mobile phone (mobile phone), a tablet computer, or a computer with a wireless transceiver function. Alternatively, the terminal apparatus may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), a vehicle-mounted terminal, a vehicle with a V2V communication capability, an intelligent connected vehicle, an unmanned aerial vehicle having a UAV-to-UAV (UAV to UAV, U2U) communication capabilities, or the like. This is not limited.

The access network element in FIG. 1c may be any device having a wireless transceiver function, and is mainly configured to implement functions such as a radio physical control function, resource scheduling and radio resource management, radio access control, and mobility management. Specifically, the access network element may be a device supporting wired access, or may be a device supporting wireless access. For example, the access network element may be an access network (access network, AN)/a radio access network (radio access network, RAN) device, where the AN/RAN includes a plurality of 5G-AN/5G-RAN nodes. A 5G-AN/5G-RAN node may be an access point (access point, AP), a NodeB (nodeB, NB), an enhanced NodeB (enhance nodeB, eNB), a next-generation NodeB (NR nodeB, gNB), a transmission reception point (transmission reception point, TRP), a transmission point (transmission point, TP), another access node, or the like.

It should be noted that the plurality of terminal apparatuses and the access network element in this embodiment of this application may be one or more chips, or may be a system on chip (system on chip, SOC), or the like. FIG. 1c is merely an example of the accompanying drawing, and a quantity of devices included in FIG. 1c is not limited. In addition, in addition to the devices shown in FIG. 1c, the communication system may further include another device. Names of devices and links in FIG. 1c are not limited. In addition to the names shown in FIG. 1c, the devices and the links may have other names. For example, a terminal communicates with the access network element by using a user equipment (user equipment, UE) interface, or UL may be named as a UE link. This is not limited.

In a specific implementation, as shown in FIG. 1c, each terminal apparatus and each access network element may use a composition structure shown in FIG. 2, or include components shown in FIG. 2. FIG. 2 is a schematic composition diagram of a communication apparatus 200 according to an embodiment of this application. The communication apparatus 200 may be a terminal apparatus or a chip or a system on chip in a terminal apparatus, or may be an access network element or a chip or a system on chip in an access network element. As shown in FIG. 2, the communication apparatus 200 includes a processor 201, a transceiver 202, and a communication line 203.

Further, the communication apparatus 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area networks, WLAN), or the like. The transceiver 202 may be a module, a circuit, a transceiver, or any apparatus that can implement communication.

The communication line 203 is configured to transmit information between the components included in the communication apparatus 200.

The memory 204 is configured to store instructions. The instructions may be a computer program.

The memory 204 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray disc, or the like), a magnetic disk storage medium or another magnetic storage device, or the like. This is not limited.

It should be noted that the memory 204 may exist independently of the processor 201, or may be integrated with the processor 201. The memory 204 may be configured to store instructions, program code, some data, or the like. The memory 204 may be located inside the communication apparatus 200, or may be located outside the communication apparatus 200. This is not limited. The processor 201 is configured to execute the instructions stored in the memory 204, to implement a resource determining method provided in following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device, for example, a keyboard, a mouse, a microphone, or a joystick, and the output device 205 is a device, for example, a display screen or a speaker (speaker).

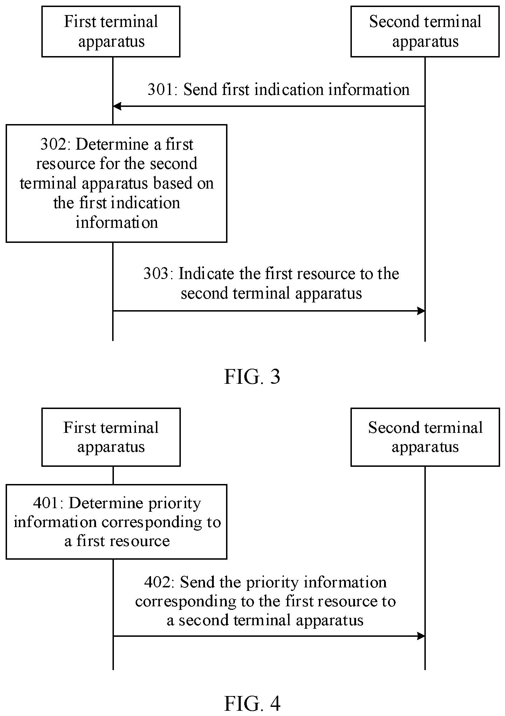

It should be noted that the communication apparatus 200 may be a desktop computer, a portable computer, a network server, a mobile phone, a tablet computer, a wireless terminal, an embedded device, a chip system, or a device having a structure similar to a structure in FIG. 2. In addition, the composition structure shown in FIG. 3 does not constitute a limitation on the communication apparatus. In addition to the components shown in FIG. 2, the communication apparatus may include more or fewer components than those shown in the figure, some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Another name may alternatively be used in a specific implementation. This is not limited.

With reference to the communication system shown in FIG. 1c, the following describes a resource determining method provided in an embodiment of this application. A second terminal apparatus may be any terminal apparatus that has to-be-sent data in the communication system, a first terminal apparatus may be any terminal apparatus that can determine a first resource for the second terminal apparatus in the communication system, and an access network element may be any access network element that can be communicatively connected to the first terminal apparatus in the communication system. The first terminal apparatus, the second terminal apparatus, and the access network element described in the following embodiments may have components shown in FIG. 2.

FIG. 3 is a flowchart of a resource determining method according to an embodiment of this application. As shown in FIG. 3, the method may include the following steps.

Step 301: A second terminal apparatus sends first indication information to a first terminal apparatus. Correspondingly, the first terminal apparatus receives the first indication information.

The first indication information may indicate the first terminal apparatus to determine a first resource for the second terminal apparatus.

Optionally, the second terminal apparatus adds the first indication information to sidelink control information (sidelink control information, SCI) signaling, media access control control element (medium access control control element, MAC CE) signaling, or PC5 radio resource control (radio resource control, RRC) signaling, and sends the first indication information to the first terminal apparatus. The first indication information may be a newly added field in SCI signaling, MEC CE signaling, or PC5 RRC signaling, and whether the first terminal apparatus determines the first resource for the second terminal apparatus may be indicated by determining whether the foregoing signaling carries the newly added field.

Alternatively, the first indication information is a specific value of the newly added field in the SCI signaling, the MAC CE signaling, or the PC5 RRC signaling. The specific value indicates whether the first terminal apparatus determines the first resource for the second terminal apparatus.

For example, the first indication information is carried in the SCI signaling. In a possible design, the first indication information may be a newly added field in the SCI signaling, and whether the first terminal apparatus determines the first resource for the second terminal apparatus may be indicated by determining whether the newly added field is added in the SCI signaling. For example, the second terminal apparatus may add a newly added field in the SCI signaling, and the second terminal apparatus may send the SCI signaling including the newly added field to the first terminal apparatus, to indicate the first terminal apparatus to determine the first resource for the second terminal apparatus. Alternatively, the second terminal apparatus may send SCI signaling that does not include the newly added field to the first terminal apparatus, to indicate the first terminal apparatus not to determine the first resource for the second terminal apparatus. It should be noted that, in this possible design, the first terminal apparatus does not need to parse the newly added field. To be specific, the first terminal apparatus may determine whether to determine the first resource for the second terminal apparatus without obtaining a specific value of the newly added field. Alternatively, in still another possible design, the second terminal apparatus may add a new field in the SCI signaling, and assign different values to the newly added field to indicate the first terminal apparatus whether to determine the first resource for the second terminal apparatus. For example, the newly added field includes one piece of indication information, and the indication information is a 1-bit binary bit number "0" or "1". When the indication information is "1", the indication information indicates the first terminal apparatus to determine the first resource for the second terminal apparatus. In this case, the indication information carried in the newly added field may be referred to as first indication information. When the indication information is "0", the indication information indicates that the first terminal apparatus does not need to determine the first resource for the second terminal apparatus.

Specifically, when the second terminal apparatus is located out of coverage (out-of-coverage, OoC) of a network or a network environment is not good, the second terminal apparatus may be triggered to send the first indication information to the first terminal apparatus.

For example, when a first measurement result of the second terminal apparatus is less than a preset threshold, the second terminal apparatus is triggered to send the first indication information to the first terminal apparatus.

The preset threshold may be set for the second terminal apparatus based on an actual measurement environment. When the first measurement result is less than the preset threshold, it indicates that the second terminal apparatus is located out of coverage of the network, a network environment in which the second terminal apparatus is currently located is poor, or a channel environment is poor, and the first resource cannot be determined according to a resource sensing mechanism or a partial resource sensing mechanism, or accuracy of the determined first resource is low. When the first measurement result is greater than or equal to the preset threshold, it indicates that a network environment in which the second terminal apparatus is located is good, or a channel environment is good, and the first resource may be determined according to a resource sensing mechanism or a partial resource sensing mechanism without using the first terminal apparatus to determine the first resource.

For example, the second terminal apparatus may perform channel state information (channel state information, CSI) measurement, and determine whether a measurement result is lower than the preset threshold. Specifically, for a specific process in which the second terminal apparatus performs the CSI measurement, refer to the conventional technology. Details are not described again.

For another example, the second terminal apparatus may further perform RSRP or RSRQ measurement, and determine whether a measurement result is less than the preset threshold. Specifically, for a specific process in which the second terminal apparatus performs the RSRP measurement, refer to the conventional technology. Details are not described again.

For another example, the second terminal apparatus may further measure a geographical location or a relative distance. The geographical location or the relative distance is measured relative to a terminal apparatus communicating with the second terminal apparatus. A larger geographical location or relative distance indicates a smaller measurement result.

Further, when unicast communication is performed between the first terminal apparatus and the second terminal apparatus, the second terminal apparatus may directly send the first indication information to the first terminal apparatus in a unicast manner, to indicate the first terminal apparatus to determine the first resource for the second terminal apparatus.

When the first terminal apparatus and the second terminal apparatus are located in a same multicast group and communicate in a multicast manner, in one case, if the first terminal apparatus is a group header (group header) of the multicast group and the second terminal apparatus is a group member, the group header may be preset to determine the first resource for group members. In this case, the second terminal apparatus may obtain the first resource determined by the group header without sending the first indication information to the first terminal apparatus. Alternatively, the group header may be set to determine the first resource for the group member after the first indication information sent by the group member is received. In still another case, if the first terminal apparatus is any member in the multicast group, and the second terminal apparatus is another member in the multicast group other than the first terminal apparatus, a member serving as the first terminal apparatus in the group may be set to determine the first resource for the another member in the group after the first terminal apparatus receives the first indication information sent by the another member in the group. This is not limited.

Specifically, for the unicast communication manner and the multicast communication manner, the second terminal apparatus may select, based on a geographical location, a minimum communication distance included in a QoS, a CSI measurement result, RSRP, or RSRQ, the first terminal apparatus that determines the first resource for the second terminal apparatus.

For example, the second terminal apparatus may select a terminal apparatus whose geographical location is within a certain range as the first terminal apparatus; may select a terminal apparatus whose communication distance with the terminal apparatus is less than a minimum communication distance as the first terminal apparatus; may select a terminal apparatus whose CSI measurement result is greater than a preset threshold as the first terminal apparatus; may select a terminal apparatus whose RSRP measurement result is greater than a preset threshold as the first terminal apparatus; or may select a terminal apparatus whose RSRQ measurement result is greater than a preset threshold as the first terminal apparatus. This is not limited.

When the first terminal apparatus is an RSU, the RSU may be preset to determine the first resource for the second terminal apparatus. In this case, the second terminal apparatus may obtain the first resource determined by the RSU without sending the first indication information to the RSU.

Step 302: The first terminal apparatus determines the first resource for the second terminal apparatus based on the first indication information.

The first resource may be used by the second terminal apparatus to send data.

Specifically, the first terminal apparatus may determine, based on received SCI signaling, MAC CE signaling, or PC5 RRC signaling that is sent by the second terminal apparatus, whether the foregoing signaling includes the first indication information, and if the signaling includes the first indication information, the first terminal apparatus is triggered to determine the first resource for the second terminal apparatus.

Optionally, the first terminal apparatus may determine the first resource for the second terminal apparatus after the first terminal apparatus receives the first indication information sent by the second terminal apparatus. Alternatively, the first terminal apparatus may determine, after the first terminal apparatus receives the first indication information sent by the second terminal apparatus, whether the first terminal apparatus can determine the first resource for the second terminal apparatus. If the first terminal apparatus can determine the first resource for the second terminal apparatus, the first terminal apparatus determines the first resource for the second terminal apparatus; otherwise, the first terminal apparatus does not determine the first resource for the second terminal apparatus. The first indication information in this embodiment of this application may also be described as trigger information, request information, or the like. This is not limited.

The SCI signaling is used as an example, corresponding to the description of the first indication information in the foregoing step 301, when the first indication information is a newly added field in the SCI signaling, the first terminal apparatus may determine whether the received SCI signaling includes the newly added field, and if the newly added field is included, it is considered that the first indication information exists. Alternatively, when the first indication information is a specific value of a newly added field in the SCI signaling, for example, the specific value of the newly added field is 1 indicates the first indication information exists, the first terminal apparatus may determine whether the value of the newly added field in the received SCI signaling is 1, and if the value of the newly added field is 1, it is considered that the first indication information exists.

In a first example, the first terminal apparatus may determine, based on first information, whether to determine the first resource for the second terminal apparatus. When it is determined, based on the first information, that the first resource is determined for the second terminal apparatus, the first resource may be determined by using a resource sensing mechanism or a partial resource sensing mechanism. For this manner, refer to the foregoing specific description of the resource sensing mechanism or the partial resource sensing mechanism, or refer to the manner described in the following second example.

The first information may include a maximum value of a quantity of second terminal apparatuses that are allowed to communicate with the first terminal apparatus; a maximum value of a quantity of second terminal apparatuses for which the first terminal apparatus allows to determine the first resource; and/or a maximum capability value of determining the first resource by the first terminal apparatus.

For example, the maximum value of the quantity of second terminal apparatuses that communicate with the first terminal apparatus and/or the maximum value of the quantity of second terminal apparatuses for which the first terminal apparatus allows to determine the first resource may be described as a maximum value. A value of the maximum value is related to a measurement result of a channel busy rate (channel busy ratio, CBR) or a measurement result of a channel occupancy rate (channel occupancy ratio, CR) of the first terminal apparatus. Alternatively, the value of the maximum value may be related to quality of service (quality of service, QoS). The QoS includes a packet delay budget (packet delay budget, PDB) and a priority (priority), and the PDB is represented as delay at a physical layer.

Specifically, when the measurement result of the CBR indicates a higher channel busy rate, the value of the maximum value may be smaller. When the measurement result of the CR indicates a higher channel occupancy rate, the value of the maximum value may be smaller. When a data delay is shorter, the value of the maximum value may be smaller. When a data priority is higher, the value of the maximum value may be smaller.

Optionally, the first terminal apparatus determines whether a quantity of second terminal apparatuses currently communicatively connected to the first terminal apparatus is less than the maximum value. If the quantity is less than the maximum value, the first terminal apparatus determines the first resource for the second terminal apparatus; otherwise, the first terminal apparatus cannot determine the first resource for the second terminal apparatus.

For example, the maximum value of the quantity of second terminal apparatuses that are allowed to communicate with the first terminal apparatus is 4. It is assumed that the first terminal apparatus establishes communication connections with a second terminal apparatus 21, a second terminal apparatus 22, and a second terminal apparatus 23. When the first terminal apparatus receives first indication information sent by a second terminal apparatus 24, the first terminal apparatus may determine that a quantity of second terminal apparatuses currently communicatively connected with the first terminal apparatus is 3. The quantity is less than 4, so that the first terminal apparatus determines that the first terminal apparatus may determine the first resource for the second terminal apparatus 24.

Optionally, the first terminal apparatus determines whether a quantity of second terminal apparatuses for which the first terminal apparatus currently determines the first resource is less than the maximum value. If the quantity is less than the maximum value, the first terminal apparatus determines the first resource for the second terminal apparatus; otherwise, the first terminal apparatus cannot determine the first resource for the second terminal apparatus.

For example, that the maximum value of the quantity of second terminal apparatuses for which the first terminal apparatus allows to determine the first resource is 3. It is assumed that the first terminal apparatus determines the first resource for the second terminal apparatus 21, the second terminal apparatus 22, and the second terminal apparatus 23. When the first terminal apparatus receives first indication information sent by the second terminal apparatus 24, the first terminal apparatus may determine that the quantity of second terminal apparatuses for which the first terminal apparatus allows to determine the first resource reaches the maximum value, and cannot determine the first resource for the second terminal apparatus 24.

Optionally, the first terminal apparatus determines whether a capability value of currently determining the first resource by the first terminal apparatus is less than the maximum value. If the capability value is less than the maximum value, the first terminal apparatus determines the first resource for the second terminal apparatus; otherwise, the first terminal apparatus cannot determine the first resource for the second terminal apparatus.

The maximum capability value may include a bandwidth upper limit or an upper limit of a time-frequency resource. For example, a bandwidth upper limit may be configured for a higher layer of the first terminal apparatus as a maximum capability value of 10 megabit bandwidth, an upper limit of a resource block (resource block, RB) may be configured for the higher layer of the first terminal apparatus as a maximum capability value of 100 RB resources, or a symbol upper limit may be configured for the higher layer of the first terminal apparatus as a maximum capability value of 100 RBs occupying N consecutive symbols in time domain. This is not limited.

A higher layer configuration may include RRC signaling configured by a base station, or may include PC5 RRC signaling configured by another terminal apparatus other than the first terminal apparatus.

In the first example, in a possible design, the first terminal apparatus determines, based on received second information, a maximum value of a quantity of second terminal apparatuses that are allowed to communicate with the first terminal apparatus; a maximum value of a quantity of second terminal apparatuses for which the first terminal apparatus allows to determine the first resource; and/or a maximum capability value of determining the first resource by the first terminal apparatus.

The second information includes the maximum value and/or the maximum capability value. The second information may be higher layer signaling. The higher layer signaling includes MAC CE signaling and PC5 RRC signaling. The PC5 RRC signaling may be PC5 RRC signaling sent by another terminal apparatus other than the first terminal apparatus. Alternatively, the higher layer signaling may be RRC signaling sent by a base station.

It should be noted that, based on a network environment in which the first terminal apparatus is located, the maximum value of the quantity of second terminal apparatuses that are allowed to communicate with the first terminal apparatus may be dynamically adjusted, the maximum value of the quantity of second terminal apparatuses for which the first terminal apparatus allows to determine the first resource may be dynamically adjusted, or the maximum capability value of determining the first resource by the first terminal apparatus may be dynamically adjusted; and the second information is sent to the first terminal apparatus.

In still another possible design, the maximum value and/or the maximum capability value are/is predefined.

Specifically, the foregoing maximum value and/or maximum capability value may be preset for the first terminal apparatus. When the first terminal apparatus determines the first resource for the second terminal apparatus, the first terminal apparatus determines the first resource based on the predefined maximum value and/or maximum capability value.

In still another possible design, the maximum value and/or the maximum capability value are/is determined based on capability information of the first terminal apparatus.

Specifically, the first terminal apparatus may report the capability information of the first terminal apparatus to a higher layer, and the higher layer determines the maximum value and/or the maximum capability value based on the capability information of the first terminal apparatus, and sends the maximum value and/or the maximum capability value to the first terminal apparatus. The first terminal apparatus may also report the capability information of the first terminal apparatus to a base station, and the base station determines the maximum value and/or the maximum capability value based on the capability information of the first terminal apparatus, and sends the maximum value and/or the maximum capability value to the first terminal apparatus.

The capability information of the first terminal apparatus may be a measurement result of a channel busy rate (channel busy ratio, CBR) of the first terminal apparatus, or may be a measurement result of a channel occupancy rate (channel occupancy ratio, CR) of the first terminal apparatus.

In a second example, the first terminal apparatus may further receive third information from the second terminal apparatus, and determine the first resource for the second terminal apparatus based on the third information.

The third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a QoS requirement of the data.

The data in this embodiment of this application may be data carried by a physical layer over a sidelink data channel (physical sidelink shared channel, PSSCH), or may be a data packet of a logical channel in a higher layer MAC protocol data unit (protocol data unit, PDU). A priority of the data may be a priority of a PSSCH indicated in the SCI or a priority of a logical channel, and the priority of the PSSCH indicated in the SCI and the priority of the logical channel are equivalent.

The QoS requirement of the data may include a delay, a transmission priority, and a minimum communication distance. Specifically, the second terminal apparatus may add, to the third information, resource-related information required by to-be-sent data, and send the third information to the first terminal apparatus, so that the first terminal apparatus determines the first resource only for the second terminal apparatus based on resource-related information of the to-be-sent data of the second terminal apparatus, and power consumption generated when the first terminal apparatus determines the first resource is reduced.

For example, the third information may be carried in SCI signaling, MAC CE signaling, or PC5 RRC signaling. The second terminal apparatus may add the third information and the first indication information to one piece of SCI signaling, MAC CE signaling, or PC5 RRC signaling, and send the SCI signaling, the MAC CE signaling, or the PC5 RRC signaling to the first terminal apparatus. Alternatively, the second terminal apparatus may add the third information and the first indication information to different pieces of SCI signaling, MAC CE signaling, or PC5 RRC signaling, and send the SCI signaling, the MAC CE signaling, or the PC5 RRC signaling to the first terminal apparatus. This is not limited.

Step 303: The first terminal apparatus indicates the first resource to the second terminal apparatus.

Optionally, when the first resource determined by the first terminal apparatus is a first resource determined by the first terminal apparatus for the second terminal apparatus, the first terminal apparatus sends fourth information to the second terminal apparatus.

The fourth information includes the first resource and second indication information, and the second indication information indicates that the first resource is the first resource determined by the first terminal apparatus for the second terminal apparatus.

Optionally, when the first resource determined by the first terminal apparatus is a first resource determined by the first terminal apparatus for the first terminal apparatus, the first terminal apparatus sends fifth information to the second terminal apparatus.

The fifth information includes the first resource determined by the first terminal apparatus for the first terminal apparatus and sixth indication information, and the sixth indication information indicates that the first resource included in the fifth information is the first resource determined by the first terminal apparatus for the first terminal apparatus.

Specifically, the fourth information or the fifth information may be SCI signaling, MAC CE signaling, or RRC signaling.

For example, the fourth information or the fifth information is SCI signaling. Some or all bits of reserved bits (reserved bits) in the SCI signaling may indicate whether the first resource is determined by the first terminal apparatus for the second terminal apparatus (that is, the fourth information) or determined by the first terminal apparatus for the first terminal apparatus (that is, the fifth information). The reserved bits may include two to four bits.

For example, one bit in the reserved bits indicates whether the first resource is determined by the first terminal apparatus for the second terminal apparatus or determined by the first terminal apparatus for the first terminal apparatus. The bit may be set to 0 to indicate that the first resource is determined by the first terminal apparatus for the second terminal apparatus. Alternatively, the bit may be set to 1 to indicate that the first resource is determined by the first terminal apparatus for the first terminal apparatus.

For another example, two bits in the reserved bits indicate whether the first resource is determined by the first terminal apparatus for the second terminal apparatus or determined by the first terminal apparatus for the first terminal apparatus. Different states in the two bits may be configured to indicate that the first resource may be used by the first terminal apparatus or another terminal apparatus, and/or a use priority. For example, the second terminal apparatus preferentially uses the first resource, or preferentially uses the first resource from a perspective of time domain or frequency domain. The two bits may be set to 00 to indicate that the first resource is determined by the first terminal apparatus for the second terminal apparatus. Alternatively, the two bits may be set to 01 to indicate that the first resource is determined by the first terminal apparatus for the first terminal apparatus. Alternatively, the two bits may be set to 10 to indicate that the first resource is preferentially used by the first terminal apparatus to send data. Alternatively, the two bits may be set to 11 to indicate that the first resource is preferentially used by the second terminal apparatus to send data.

For another example, a quantity of bits greater than two bits in the reserved bits may indicate whether the first resource is determined by the first terminal apparatus for the second terminal apparatus or determined by the first terminal apparatus for the first terminal apparatus. Each state of the quantity of bits may be configured to indicate that the first resource may be used by the first terminal apparatus or another terminal apparatus, and/or a use priority. The priority includes preferentially using a resource with earlier time domain, or preferentially using a resource with a smaller frequency domain index.

Further, after the second terminal apparatus receives the fourth information, the second terminal apparatus may determine that the first resource included in the fourth information is determined by the first terminal apparatus for the second terminal apparatus, and further use, based on the first resource, the first resource as a resource for sending the data, or select some resources from the first resource as resources for sending the data, and send the data by using the resources.

After the second terminal apparatus receives the fifth information, the second terminal apparatus may determine that the first resource included in the fifth information is determined by the first terminal apparatus for the first terminal apparatus, and the second terminal apparatus cannot determine, based on the first resource, a resource for sending the data. The second terminal apparatus may send the first indication information to another first terminal apparatus, so that the another first terminal apparatus determines the first resource for the second terminal apparatus based on the received first indication information.

Based on the method shown in FIG. 3, in this embodiment of this application, the first terminal apparatus may determine, based on the received first indication information sent by the second terminal apparatus, for the second terminal apparatus, the first resource used by the second terminal apparatus to send the data, where the first indication information indicates the first terminal apparatus to determine the first resource for the second terminal apparatus; and indicate the determined first resource to the second terminal apparatus. In comparison with a conventional technology, in this embodiment of this application, the second terminal apparatus may send the first indication information to the first terminal apparatus when the second terminal apparatus needs to send the data, so that the first terminal apparatus determines, based on the first indication information, the first resource used by the second terminal apparatus to send the data. This avoids a case in which a time-frequency resource required when the second terminal apparatus sends a periodic data does not match a first resource periodically determined by the first terminal apparatus, and improves a data sending success rate.

In addition, in the foregoing step 302, when the first terminal apparatus determines the first resource for the second terminal apparatus, to avoid congestion caused by resource preemption by each terminal apparatus, the first terminal apparatus may further determine, for the first resource, priority information corresponding to the first resource. Specifically, for a process of determining the priority information, refer to FIG. 4.

FIG. 4 is a flowchart of a resource determining method according to an embodiment of this application. The method includes the following steps.

Step 401: A first terminal apparatus determines priority information corresponding to a first resource.

The priority information corresponding to the first resource may indicate the terminal apparatus to determine, from the first resource, a priority of a resource for to-be-sent data.

Specifically, the first terminal apparatus may determine, based on a priority of to-be-sent data of the first terminal apparatus or a priority of to-be-sent data of a second terminal apparatus, the priority information corresponding to the first resource.

Optionally, the first terminal apparatus fixedly sets the priority information corresponding to the first resource. For example, the priority information corresponding to the first resource is fixedly set to the priority of the to-be-sent data of the first terminal apparatus, so that the first terminal apparatus can preferentially determine, from the first resource, a resource for sending the data. This reduces a probability that the first resource is preempted by another terminal apparatus due to data sending, and improves a data sending success rate of the first terminal apparatus. Alternatively, the priority information corresponding to the first resource is fixedly set to the priority of the to-be-sent data of the second terminal apparatus, so that the second terminal apparatus can preferentially determine, from the first resource, a resource for sending the data. This reduces a probability that the first resource is preempted by another terminal apparatus due to data sending, and improves a data sending success rate of the second terminal apparatus. For example, the first resource determined by the first terminal apparatus is a first resource 1. It is assumed that a third terminal apparatus may determine the first resource according to a resource sensing mechanism or a partial resource sensing mechanism. To prevent the third terminal apparatus from preempting the first resource 1 determined by the first terminal apparatus when the third terminal apparatus determines the first resource, priority information of the first resource 1 may be set to the priority of the to-be-sent data of the first terminal apparatus, or the priority information of the first resource 1 may be set to the priority of the to-be-sent data of the second terminal apparatus. Therefore, the third terminal is prevented from preempting the first resource 1.

Optionally, the first terminal apparatus dynamically sets, based on the priority of the to-be-sent data of the first terminal apparatus and the priority of the to-be-sent data of the second terminal apparatus, the priority information corresponding to the first resource.

For example, the priority information corresponding to the first resource is set to a higher priority between the priority of the to-be-sent data of the first terminal apparatus and the priority of the to-be-sent data of the second terminal apparatus. The priority information is set to the higher priority between the priority of the to-be-sent data of the first terminal apparatus and the priority of the to-be-sent data of the second terminal apparatus, so that a terminal apparatus that uses the first resource can preferentially send to-be-sent data. This reduces a probability that the first resource is preempted by another terminal apparatus due to data sending, and improves a data sending success rate of the terminal apparatus that uses the first resource.

Alternatively, in a case in which resources are congested and occupying a large block of contiguous resources is not conducive to resource allocation from a perspective of a system, the priority information corresponding to the first resource is set to a lower priority between the priority of the to-be-sent data of the first terminal apparatus and the priority of the to-be-sent data of the second terminal apparatus. The priority information is set to the lower priority between the priority of the to-be-sent data of the first terminal apparatus and the priority of the to-be-sent data of the second terminal apparatus. This reduces a probability that a resource is preempted by a terminal apparatus that uses the first resource, and improves a data sending success rate of another terminal apparatus in a resource congestion case.

Optionally, the priority of the data is determined based on a packet delay budget (packet delay budget, PDB) of the data, and a smaller PDB of the data indicates a higher priority of the data.

Further, the first terminal apparatus and the second terminal apparatus may determine, from the first resource based on priorities indicated by the priority information, resources for sending the data, and send the data.

Optionally, the first terminal apparatus further determines, based on a priority of to-be-sent data of at least one second terminal apparatus, a priority of a resource that is used to send the data and that is determined by the at least one second terminal apparatus from the first resource.

For example, the second terminal apparatus includes a second terminal apparatus 21, a second terminal apparatus 22, and a second terminal apparatus 23. It is assumed that priorities of to-be-sent data of the second terminal apparatuses are: the second terminal apparatus 22>the second terminal apparatus 23>the second terminal apparatus 21, the second terminal apparatus 22 preferentially determines, from the first resource, a resource for sending the data, then the second terminal apparatus 23 determines, and finally the second terminal apparatus 21 determines.

Optionally, the first terminal apparatus divides the first resource into a plurality of resource blocks, and a plurality of second terminal apparatuses determine, based on priorities of to-be-sent data, priorities of the resource blocks determined by the plurality of second terminal apparatuses from the first resource. A higher priority of the to-be-sent data indicates a higher priority of a resource block determined by a second terminal apparatus corresponding to the to-be-sent data from the first resource.

For example, the first terminal apparatus divides the first resource into three resource blocks, and the second terminal apparatus includes a second terminal apparatus 21, a second terminal apparatus 22, and a second terminal apparatus 23. It is assumed that priorities of to-be-sent data of the second terminal apparatuses are: the second terminal apparatus 22>the second terminal apparatus 23>the second terminal apparatus 21, the second terminal apparatus 22 preferentially determines, from the first resource, a resource block for sending the data, then the second terminal apparatus 23 determines, and finally the second terminal apparatus 21 determines.

Optionally, the first terminal apparatus divides the first resource into a plurality of resource blocks, and a plurality of second terminal apparatuses determine, based on distances from the first terminal or RSRP measurement results, that the plurality of second terminal apparatuses determine priorities of the resource blocks from the first resource.

It may be preset that a longer distance between the second terminal apparatus and the first terminal apparatus or a larger RSRP measurement result indicates a higher priority of a resource block selected by the second terminal apparatus.

For example, the first terminal apparatus divides the first resource into three resource blocks, and the second terminal apparatus includes a second terminal apparatus 21, a second terminal apparatus 22, and a second terminal apparatus 23. It is assumed that distances between the second terminal apparatuses and the first terminal apparatus are: the second terminal apparatus 22>the second terminal apparatus 23>the second terminal apparatus 21, the second terminal apparatus 22 preferentially determines, from the first resource, a resource block for sending the data, then the second terminal apparatus 23 determines, and finally the second terminal apparatus 21 determines.

For another example, the first terminal apparatus divides the first resource into three resource blocks, and the second terminal apparatus includes a second terminal apparatus 21, a second terminal apparatus 22, and a second terminal apparatus 23. It is assumed that measurement results of the RSRP of the second terminal apparatuses are: the second terminal apparatus 22>the second terminal apparatus 23>the second terminal apparatus 21, the second terminal apparatus 22 preferentially determines, from the first resource, a resource block for sending the data, then the second terminal apparatus 23 determines, and finally the second terminal apparatus 21 determines.

Alternatively, it may be preset that a shorter distance between the second terminal apparatus and the first terminal apparatus or a smaller RSRP measurement result indicates a higher priority of a resource block selected by the second terminal apparatus. This is not limited.

Step 402: The first terminal apparatus sends the priority information corresponding to the first resource to a second terminal apparatus. Correspondingly, the second terminal apparatus receives the priority information corresponding to the first resource.

Specifically, the second terminal apparatus may determine, based on the priority information corresponding to the first resource, a priority of a resource that is used to send the data and that is determined by the second terminal apparatus from the first resource, and further send the data by using the determined resource.

FIG. 4 describes a process in which the first terminal apparatus determines the priority information corresponding to the first resource for the first resource. To reduce power consumption generated by the first terminal apparatus for determining the first resource, when the first terminal apparatus determines the first resource for the second terminal apparatus in step 302, the first terminal apparatus may further determine a first time period for the first resource by using any one of the following first case to fourth case, and determine the first resource for the second terminal apparatus in the first time period. This prevents the first terminal apparatus from continuously determining the first resource for the second terminal apparatus, and reduces power consumption caused by determining the first resource by the first terminal apparatus.

In the first case, the first time period is duration in which the second terminal apparatus sends the data.

Optionally, when the second terminal apparatus periodically sends the data, the first terminal apparatus periodically determines, based on a period in which the second terminal apparatus sends the data, the first resource for the second terminal apparatus in the first time period.

For example, when the period in which the second terminal apparatus sends the data is 10s, the first terminal apparatus may determine the first resource for the second terminal apparatus in a period of 10s. It should be noted that the period in which the second terminal apparatus sends the data matches a period in which the first terminal apparatus determines the data, to ensure that the first resource is not occupied by another terminal apparatus when the second terminal apparatus sends the data by using the first resource. The first terminal apparatus may also reserve a plurality of resources for the second terminal apparatus in one period.

Optionally, when the second terminal apparatus aperiodically sends the data, the first terminal apparatus determines the first resource for the second terminal apparatus for one time in the first time period.

Specifically, when the second terminal apparatus aperiodically sends the data, the first terminal apparatus may determine the first resource for the second terminal apparatus for one time after the first terminal apparatus receives the first indication information sent by the second terminal apparatus, so that when the first terminal apparatus determines the first resource for the second terminal apparatus, power consumption caused by determining the first resource by the first terminal apparatus is reduced.

In the second case, the first time period is indicated to the first terminal apparatus by using third indication information.

The third indication information includes the first time period, and the first time period is a time period with a fixed size.

Specifically, the first time period may be determined based on related information of the to-be-sent data of the second terminal apparatus, where the related information may include a measurement result of a CBR or a CR of the second terminal apparatus, a delay of the to-be-sent data, a priority of the to-be-sent data, a data volume of the to-be-sent data, a distance between the first terminal apparatus and the second terminal apparatus, a minimum communication distance requirement of the second terminal apparatus, and the like.

A higher measurement result of the CBR or the CR of the second terminal apparatus indicates a shorter first time period; a shorter delay of the to-be-sent data indicates a longer first time period; a higher priority of the to-be-sent data indicates a longer first time period; and a larger data volume of the to-be-sent data indicates a longer first time period. For example, three bits indicate the priority of the to-be-sent data. "000" may indicate a highest priority, and " 111" may indicate a lowest priority. Alternatively, "111" may indicate a highest priority, and "000" may indicate a lowest priority. This is not limited.

Optionally, the third indication information is MAC CE signaling or PC5 RRC signaling, and the PC5 RRC signaling is PC5 RRC signaling sent by another terminal apparatus other than the first terminal apparatus. The third indication information is further RRC signaling sent by a base station.

In a third case, end time of the first time period is time at which the first terminal apparatus receives fourth indication information from the second terminal apparatus; or end time of the first time period is first time included in fourth indication information.

The fourth indication information indicates the first terminal apparatus to stop determining the first resource for the second terminal apparatus. When the fourth indication information includes the first time, the fourth indication information further indicates the first terminal apparatus to stop, at the first time, determining the first resource for the second terminal apparatus.

Specifically, when the second terminal apparatus moves to a place with good network quality, the second terminal apparatus may determine the first resource by the second terminal apparatus, and does not need to determine the first resource by using the first terminal apparatus, or when the second terminal apparatus does not need to send data subsequently and does not need to determine the first resource, the second terminal apparatus may send the fourth indication information to the first terminal apparatus, to indicate the first terminal apparatus to stop, determining the first resource for the second terminal apparatus.

The first time period is a period of time from time at which the first terminal apparatus receives the first indication information sent by the second terminal apparatus to the time at which the first terminal apparatus receives the fourth indication information sent by the second terminal apparatus.

The second terminal apparatus may also determine the first time at which the first terminal apparatus stops determining the first resource for the second terminal apparatus, add the first time to the fourth indication information, and send the fourth indication information to the first terminal apparatus, to indicate the first terminal apparatus to stop, at the first time, determining the first resource for the second terminal apparatus.

The first time period is a period of time from time at which the first terminal apparatus receives the first indication information sent by the second terminal apparatus to the first time indicated by the fourth indication information.

For example, corresponding to the first indication information in step 301, the SCI signaling is used as an example. When the second terminal apparatus indicates the first indication information by adding a new field to the SCI signaling, the second terminal apparatus may send SCI signaling that does not include the new field to the first terminal apparatus, to indicate the first terminal apparatus not to determine (or stop determining) the first resource for the second terminal apparatus. The SCI signaling that does not include the new field may be referred to as the fourth indication information. Alternatively, when the second terminal apparatus assigns different values to the newly added field to indicate the first indication information, for example, that a specific value of the newly added field is 1 indicates the first indication information, the second terminal apparatus may send SCI signaling whose specific value of the newly added field is 0 to the first terminal apparatus, to indicate the first terminal apparatus not to determine (or stop determining) the first resource for the second terminal apparatus. The SCI signaling whose specific value of the newly added field is 0 may be referred to as the fourth indication information.

In a fourth case, end time of the first time period is time at which the first terminal apparatus sends fifth indication information to the second terminal apparatus; or end time of the first time period is second time included in fifth indication information.

The fifth indication information indicates the first terminal apparatus to stop determining the first resource for the second terminal apparatus. When the fifth indication information includes the second time, the fifth indication information further indicates the first terminal apparatus to stop, at the second time, determining the first resource for the second terminal apparatus.

Specifically, when the first terminal apparatus moves to a place with poor network quality and cannot continue to determine the first resource for the second terminal apparatus, or power consumption of the first terminal apparatus is high because the first terminal apparatus currently determines the first resource for the second terminal apparatus, the first terminal apparatus may send the fifth indication information to the second terminal apparatus, to indicate that the first terminal apparatus cannot continue to determine the first resource for the second terminal apparatus.

The first time period is a period of time from time at which the first terminal apparatus receives the first indication information sent by the second terminal apparatus to the time at which the first terminal apparatus sends the fifth indication information to the second terminal apparatus.

The first terminal apparatus may also determine the second time at which the first terminal apparatus stops determining the first resource for the second terminal apparatus, add the second time to the fifth indication information, and send the fifth indication information to the second terminal apparatus, to notify the second terminal apparatus that the first terminal apparatus stops, at the second time, determining the first resource for the second terminal apparatus.

The first time period is a period of time from time at which the first terminal apparatus receives the first indication information sent by the second terminal apparatus to the second time indicated by the fifth indication information.

Optionally, the first terminal apparatus sends the fifth information to the second terminal apparatus, and indicates, to the second terminal apparatus, that the first resource is determined by the first terminal apparatus for the first terminal apparatus. By default, the first terminal apparatus stops determining the first resource for the second terminal apparatus. In this case, the fifth information is referred to as the fifth indication information.

The foregoing mainly describes the solutions provided in embodiments of this application from a perspective of interaction between the devices. It may be understood that, to implement the foregoing functions, the devices include hardware structures and/or software modules for performing the functions. A person skilled in the art should be easily aware that, in combination with the examples described in embodiments disclosed in this specification, algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, various network elements may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module.

It should be noted that, in embodiments of this application, module division is an example, and is merely a logical function division. In an actual implementation, another division manner may be used.

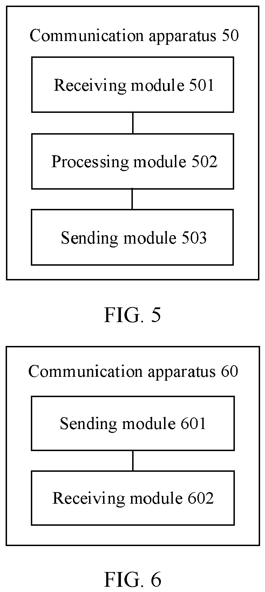

When each functional module is obtained through division based on each corresponding function, FIG. 5 shows a communication apparatus. The communication apparatus 50 may be a first terminal apparatus or a chip or a system on chip in the first terminal apparatus. The communication apparatus 50 may be configured to perform a function of the first terminal in the foregoing embodiments. The communication apparatus 50 shown in FIG. 5 includes a receiving module 501, a processing module 502, and a sending module 503.

The receiving module 501 is configured to receive first indication information that is from a second terminal apparatus and that indicates a first terminal apparatus to determine a first resource for the second terminal apparatus.

The processing module 502 is configured to determine, for the second terminal apparatus based on the first indication information, the first resource used by the second terminal apparatus to send data.

The sending module 503 is configured to indicate the first resource to the second terminal apparatus.

For a specific implementation of the communication apparatus 50, refer to behavior functions of the first terminal apparatus in the resource determining methods in FIG. 3 and FIG. 4.

In a possible design, the processing module 502 is further configured to determine the first resource for the second terminal apparatus based on first information, where the first information includes a maximum value of a quantity of second terminal apparatuses that are allowed to communicate with the first terminal apparatus; a maximum value of a quantity of second terminal apparatuses for which the first terminal apparatus allows to determine the first resource; and/or a maximum capability value of determining the first resource by the first terminal apparatus.

In a possible design, the processing module 502 is further configured to determine the maximum value and/or the maximum capability value based on second information including the maximum value and/or the maximum capability value, and the second information may include RRC signaling; the maximum value and/or the maximum capability value are/is predefined; or the maximum value and/or the maximum capability value are/is determined based on capability information of the first terminal apparatus.

In a possible design, the receiving module 501 is further configured to receive third information from the second terminal apparatus, where the third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data. The processing module 502 is further configured to determine the first resource for the second terminal apparatus based on the third information.

In a possible design, the sending module 503 is further configured to send fourth information including the first resource and second indication information to the second terminal apparatus, where the second indication information indicates that the first resource is the first resource determined by the first terminal apparatus for the second terminal apparatus.

In a possible design, the fourth information is sidelink control information SCI signaling, media access control control element MAC CE signaling, or radio resource control RRC signaling.

In a possible design, the processing module 502 is further configured to determine, based on a priority of to-be-sent data of the first terminal apparatus or a priority of the to-be-sent data of the second terminal apparatus, priority information corresponding to the first resource, where the first terminal apparatus and/or the second terminal apparatus send/sends data by using the first resource based on a priority indicated by the priority information; and the first terminal apparatus sends the priority information to the second terminal apparatus.

In a possible design, the priority information is the priority of the to-be-sent data of the first terminal apparatus; the priority information is the priority of the to-be-sent data of the second terminal apparatus; the priority information is a higher priority between the priority of the to-be-sent data of the first terminal apparatus and the priority of the to-be-sent data of the second terminal apparatus; or the priority information is a lower priority between the priority of the to-be-sent data of the first terminal apparatus and the priority of the to-be-sent data of the second terminal apparatus. In a possible design, a priority of the data is determined based on a packet delay budget PDB of the data, and a smaller PDB of the data indicates a higher priority of the data.

In a possible design, the second terminal apparatus is at least one second terminal apparatus, and the processing module 502 is further configured to determine, based on a priority of to-be-sent data of the at least one second terminal apparatus, a priority of a resource that is used to send the data and that is determined by the at least one second terminal apparatus from the first resource.

In a possible design, the processing module 502 is further configured to determine the first resource for the second terminal apparatus in a first time period, where the first time period is duration in which the second terminal apparatus sends the data. Alternatively, the first time period is indicated to the first terminal apparatus by using third indication information including the first time period. Alternatively, end time of the first time period is time at which the first terminal apparatus receives, from the second terminal apparatus, fourth indication information that indicates the first terminal apparatus to stop determining the first resource for the second terminal apparatus. Alternatively, end time of the first time period is time at which the first terminal apparatus sends, to the second terminal apparatus, fifth indication information that indicates the first terminal apparatus to stop determining the first resource for the second terminal apparatus.

In a possible design, when the second terminal apparatus periodically sends the data, the processing module 502 is further configured to periodically determine, based on a period in which the second terminal apparatus sends the data, the first resource for the second terminal apparatus in the first time period. When the second terminal apparatus aperiodically sends the data, the processing module 502 is further configured to determine the first resource for the second terminal apparatus for one time in the first time period.

In a possible design, the sending module 503 is further configured to send fifth information to the second terminal apparatus, where the fifth information includes a first resource determined by the first terminal apparatus for the first terminal apparatus and sixth indication information, and the sixth indication information indicates that the first resource included in the fifth information is the first resource determined by the first terminal apparatus for the first terminal apparatus.

In still another possible implementation, the receiving module 501 and the sending module 503 in FIG. 5 may be replaced with a transceiver, functions of the receiving module 501 and the sending module 503 may be integrated into the transceiver, the processing module 502 may be replaced with a processor, and a function of the processing module 502 may be integrated into the processor. Further, the communication apparatus 50 shown in FIG. 5 may further include a memory. When the receiving module 501 and the sending module 503 are replaced with a transceiver, and the processing module 502 is replaced with a processor, the communication apparatus 50 in this embodiment of this application may be the communication apparatus shown in FIG. 2.

When each functional module is obtained through division based on each corresponding function, FIG. 6 shows a communication apparatus. The communication apparatus 60 may be a second terminal apparatus or a chip or a system on chip in the second terminal apparatus. The communication apparatus 60 may be configured to perform functions of the second terminal apparatus in the foregoing embodiments. The communication apparatus 60 shown in FIG. 6 includes a sending module 601 and a receiving module 602.

The sending module 601 is configured to send, to a first terminal apparatus, first indication information that indicates the first terminal apparatus to determine a first resource for a second terminal apparatus.

The receiving module 602 is configured to receive, from the first terminal apparatus, the first resource used by the second terminal apparatus to send data.

For a specific implementation of the communication apparatus 60, refer to behavior functions of the second terminal apparatus in the resource determining methods in FIG. 3 and FIG. 4.

In a possible design, the sending module 601 is configured to: when a first measurement result of the second terminal apparatus is less than a preset threshold, send the first indication information to the first terminal apparatus, where the first measurement result is a result of network quality measured by the second terminal apparatus.

In a possible design, the sending module 601 is further configured to send third information to the first terminal apparatus, where the third information includes at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data.

In a possible design, the receiving module 602 is further configured to receive, from the first terminal, fourth information that includes the first resource and second indication information, where the second indication information indicates that the first resource is the first resource determined by the first terminal apparatus for the second terminal apparatus.

In a possible design, the fourth information is sidelink control information SCI signaling, media access control control element MAC CE signaling, or radio resource control RRC signaling.

In a possible design, the receiving module 602 is further configured to receive, from the first terminal apparatus, priority information corresponding to the first resource, where the priority information is determined based on a priority of to-be-sent data of the first terminal apparatus or a priority of the to-be-sent data of the second terminal apparatus, and the first terminal apparatus and/or the second terminal apparatus send/sends data by using the first resource based on a priority indicated by the priority information.

In a possible design, the priority information is the priority of the to-be-sent data of the first terminal apparatus; the priority information is the priority of the to-be-sent data of the second terminal apparatus; the priority information is a higher priority between the priority of the to-be-sent data of the first terminal apparatus and the priority of the to-be-sent data of the second terminal apparatus; or the priority information is a lower priority between the priority of the to-be-sent data of the first terminal apparatus and the priority of the to-be-sent data of the second terminal apparatus. In a possible design, a priority of the data is determined based on a packet delay budget PDB of the data, and a smaller PDB of the data indicates a higher priority of the data.

In a possible design, the receiving module 602 is further configured to receive, in a first time period, the first resource determined by the first terminal apparatus for the second terminal apparatus, where the first time period is duration in which the second terminal apparatus sends data. Alternatively, the first time period is indicated to the first terminal apparatus by using third indication information, where the third indication information includes the first time period. Alternatively, end time of the first time period is time at which the second terminal apparatus sends fourth indication information, where the fourth indication information indicates the first terminal apparatus to stop determining the first resource for the second terminal apparatus. Alternatively, end time of the first time period is time at which the second terminal receives fifth indication information from the first terminal apparatus, where the fifth indication information indicates the first terminal apparatus to stop determining the first resource for the second terminal apparatus.

In a possible design, the receiving module 602 is further configured to: when the second terminal apparatus periodically sends the data, periodically receive, based on a period in which the second terminal apparatus sends the data, the first resource determined by the first terminal apparatus for the second terminal apparatus in the first time period. The receiving module 602 is further configured to: when the second terminal apparatus aperiodically sends the data, receive the first resource determined by the first terminal apparatus for the second terminal apparatus for one time in the first time period.

In a possible design, the receiving module 602 is further configured to receive fifth information from the first terminal apparatus, where the fifth information includes a first resource determined by the first terminal apparatus for the first terminal apparatus and sixth indication information, and the sixth indication information indicates that the first resource included in the fifth information is the first resource determined by the first terminal apparatus for the first terminal apparatus.

In still another possible implementation, the sending module 601 and the receiving module 602 in FIG. 6 may be replaced with a transceiver, and functions of the sending module 601 and the receiving module 602 may be integrated into the transceiver. Further, the communication apparatus 60 shown in FIG. 6 may further include a memory. When the sending module 601 and the receiving module 602 are replaced with a transceiver, the communication apparatus 60 in this embodiment of this application may be the communication apparatus shown in FIG. 2.

An embodiment of this application further provides a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the terminal (including a data transmit end and/or a data receive end) in any one of the foregoing embodiments, for example, a hard disk drive or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that are configured on the terminal. Further, the computer-readable storage medium may alternatively include both of the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may indicate a, b, c, "a and b", "a and c", "b and c", or "a, b, and c", where a, b, and c may be singular or plural.

Based on the foregoing descriptions of the implementations, a person skilled in the art may clearly understand that, for the purpose of convenient and brief descriptions, division into the foregoing functional modules is merely used as an example for description. During actual application, the foregoing functions may be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed at a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A resource determining method, comprising:

   receiving, by a first terminal apparatus, first indication information from a second terminal apparatus, wherein the first indication information indicates the first terminal apparatus to determine a first resource for the second terminal apparatus;
   determining, by the first terminal apparatus, the first resource for the second terminal apparatus based on the first indication information; and
   indicating, by the first terminal apparatus, the first resource to the second terminal apparatus, wherein the first resource is used by the second terminal apparatus to send data.

2. The method according to claim 1, wherein the determining, by the first terminal apparatus, the first resource for the second terminal apparatus comprises:
   determining, by the first terminal apparatus, the first resource for the second terminal apparatus based on first information, wherein the first information comprises a maximum value of a quantity of second terminal apparatuses that are allowed to communicate with the first terminal apparatus; a maximum value of a quantity of second terminal apparatuses for which the first terminal apparatus allows to determine the first resource; and/or a maximum capability value of determining the first resource by the first terminal apparatus.

3. The method according to claim 2, wherein

   the maximum value and/or the maximum capability value are/is determined based on second information, the second information comprises the maximum value and/or the maximum capability value, and the second information comprises radio resource control RRC signaling;
   the maximum value and/or the maximum capability value are/is predefined; or
   the maximum value and/or the maximum capability value are/is determined based on capability information of the first terminal apparatus.

4. The method according to any one of claims 1 to 3, wherein the method further comprises:

   receiving, by the first terminal apparatus, third information from the second terminal apparatus, wherein the third information comprises at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data; and
   determining, by the first terminal apparatus, the first resource for the second terminal apparatus based on the third information.

5. The method according to any one of claims 1 to 4, wherein the indicating, by the first terminal apparatus, the first resource to the second terminal apparatus comprises:
   sending, by the first terminal apparatus, fourth information to the second terminal apparatus, wherein the fourth information comprises the first resource and second indication information, and the second indication information indicates that the first resource is the first resource determined by the first terminal apparatus for the second terminal apparatus.

6. The method according to claim 5, wherein the fourth information is sidelink control information SCI signaling, media access control control element MAC CE signaling, or radio resource control RRC signaling.

**7.** The method according to any one of claims 1 to 6, wherein the method further comprises:

determining, by the first terminal apparatus based on a priority of to-be-sent data of the first terminal apparatus or a priority of the to-be-sent data of the second terminal apparatus, priority information corresponding to the first resource, wherein the first terminal apparatus and/or the second terminal apparatus send/sends data by using the first resource based on a priority indicated by the priority information; and

sending, by the first terminal apparatus, the priority information to the second terminal apparatus.

**8.** The method according to claim 7, wherein

the priority information is the priority of the to-be-sent data of the first terminal apparatus;
the priority information is the priority of the to-be-sent data of the second terminal apparatus;
the priority information is a higher priority between the priority of the to-be-sent data of the first terminal apparatus and the priority of the to-be-sent data of the second terminal apparatus; or
the priority information is a lower priority between the priority of the to-be-sent data of the first terminal apparatus and the priority of the to-be-sent data of the second terminal apparatus.

**9.** The method according to claim 7 or 8, wherein a priority of the data is determined based on a packet delay budget PDB of the data, and a smaller PDB of the data indicates a higher priority of the data.

**10.** The method according to any one of claims 1 to 9, wherein the method further comprises:
determining, by the first terminal apparatus based on a priority of to-be-sent data of at least one second terminal apparatus, a priority of a resource that is used to send the data and that is determined by the at least one second terminal apparatus from the first resource, wherein the second terminal apparatus is the at least one second terminal apparatus.

**11.** The method according to any one of claims 1 to 10, wherein the method further comprises:

determining, by the first terminal apparatus, the first resource for the second terminal apparatus in a first time period, wherein
the first time period is duration in which the second terminal apparatus sends the data;
the first time period is indicated to the first terminal apparatus by using third indication information, wherein the third indication information comprises the first time period;
end time of the first time period is time at which the first terminal apparatus receives fourth indication information from the second terminal apparatus, wherein the fourth indication information indicates the first terminal apparatus to stop determining the first resource for the second terminal apparatus;
end time of the first time period is first time comprised in fourth indication information received by the first terminal apparatus from the second terminal apparatus, wherein the fourth indication information indicates the first terminal apparatus to stop, at the first time, determining the first resource for the second terminal apparatus;
end time of the first time period is time at which the first terminal apparatus sends fifth indication information to the second terminal apparatus, wherein the fifth indication information indicates the first terminal apparatus to stop determining the first resource for the second terminal apparatus; or
end time of the first time period is second time comprised in fifth indication information sent by the first terminal apparatus to the second terminal apparatus, wherein the fifth indication information indicates the first terminal apparatus to stop, at the second time, determining the first resource for the second terminal apparatus.

**12.** The method according to claim 11, wherein the determining, by the first terminal apparatus, the first resource for the second terminal apparatus in a first time period comprises:

when the second terminal apparatus periodically sends the data, periodically determining, by the first terminal apparatus based on a period in which the second terminal apparatus sends the data, the first resource for the second terminal apparatus in the first time period; and
when the second terminal apparatus aperiodically sends the data, determining, by the first terminal apparatus, the first resource for the second terminal apparatus for one time in the first time period.

**13.** The method according to any one of claims 1 to 12, wherein the method further comprises:
sending, by the first terminal apparatus, fifth information to the second terminal apparatus, wherein the fifth information comprises a first resource determined by the first terminal apparatus for the first terminal apparatus and sixth indication information, and the sixth indication information indicates that the first resource comprised in the fifth information is the first resource determined by the first terminal apparatus for the first terminal apparatus.

**14.** A resource determining method, comprising:

sending, by a second terminal apparatus, first indication information to a first terminal apparatus, wherein the first indication information indicates the first terminal apparatus to determine a first resource for the second terminal apparatus; and
receiving, by the second terminal apparatus, the first resource from the first terminal apparatus, wherein the first resource is used by the second terminal apparatus to send data.

**15.** The method according to claim 14, wherein the sending, by a second terminal apparatus, first indication information to a first terminal apparatus comprises: when a first measurement result of the second terminal apparatus is less than a preset threshold, sending, by the second terminal apparatus, the first indication information to the first terminal apparatus, wherein the first measurement result is a result of network quality measured by the second terminal apparatus.

**16.** The method according to claim 14 or 15, wherein the method further comprises: sending, by the second terminal apparatus, third information to the first terminal apparatus, wherein the third information comprises at least one of the following: time of to-be-sent data of the second terminal apparatus, a size of the data, a time-frequency resource required by the data, a measurement result of a channel busy rate CBR or a channel occupancy rate CR of the second terminal apparatus, or a quality of service QoS requirement of the data.

**17.** The method according to any one of claims 14 to 16, wherein the receiving, by the second terminal apparatus, the first resource from the first terminal apparatus comprises: receiving, by the second terminal apparatus, fourth information from the first terminal, wherein the fourth information comprises the first resource and second indication information, and the second indication information indicates that the first resource is the first resource determined by the first terminal apparatus for the second terminal apparatus.

**18.** The method according to claim 17, wherein the fourth information is sidelink control information SCI signaling, media access control control element MAC CE signaling, or radio resource control RRC signaling.

**19.** The method according to any one of claims 14 to 18, wherein the method further comprises: receiving, by the second terminal apparatus, priority information corresponding to the first resource from the first terminal apparatus, wherein the priority information is determined based on a priority of to-be-sent data of the first terminal apparatus or a priority of the to-be-sent data of the second terminal apparatus, and the first terminal apparatus and/or the second terminal apparatus send/sends data by using the first resource based on a priority indicated by the priority information.

**20.** The method according to claim 19, wherein

the priority information is the priority of the to-be-sent data of the first terminal apparatus;
the priority information is the priority of the to-be-sent data of the second terminal apparatus;
the priority information is a higher priority between the priority of the to-be-sent data of the first terminal apparatus and the priority of the to-be-sent data of the second terminal apparatus; or
the priority information is a lower priority between the priority of the to-be-sent data of the first terminal apparatus and the priority of the to-be-sent data of the second terminal apparatus.

**21.** The method according to claim 19 or 20, wherein a priority of the data is determined based on a packet delay budget PDB of the data, and a smaller PDB of the data indicates a higher priority of the data.

**22.** The method according to any one of claims 14 to 21, wherein the method further comprises:

receiving, by the second terminal apparatus, the first resource determined by the first terminal apparatus for the second terminal apparatus in a first time period, wherein
the first time period is duration in which the second terminal apparatus sends the data;
the first time period is indicated to the first terminal apparatus by using third indication information, wherein the third indication information comprises the first time period;
end time of the first time period is time at which the first terminal apparatus receives fourth indication information from the second terminal apparatus, wherein the fourth indication information indicates the first terminal apparatus to stop determining the first resource for the second terminal apparatus;
end time of the first time period is first time comprised in fourth indication information received by the first terminal apparatus from the second terminal apparatus, wherein the fourth indication information indicates the first terminal apparatus to stop, at the first time, determining the first resource for the second terminal apparatus;
end time of the first time period is time at which the first terminal apparatus sends fifth indication information to the second terminal apparatus, wherein the fifth indication information indicates the first terminal apparatus to stop determining the first resource for the second terminal apparatus; or

end time of the first time period is second time comprised in fifth indication information sent by the first terminal apparatus to the second terminal apparatus, wherein the fifth indication information indicates the first terminal apparatus to stop, at the second time, determining the first resource for the second terminal apparatus.

23. The method according to claim 22, wherein the receiving, by the second terminal apparatus, the first resource determined by the first terminal apparatus for the second terminal apparatus in a first time period comprises:

when the second terminal apparatus periodically sends the data, periodically receiving, by the second terminal apparatus based on a period in which the second terminal apparatus sends the data, the first resource determined by the first terminal apparatus for the second terminal apparatus in the first time period; and
when the second terminal apparatus aperiodically sends the data, receiving, by the second terminal apparatus, the first resource determined by the first terminal apparatus for the second terminal apparatus for one time in the first time period.

24. The method according to any one of claims 14 to 23, wherein the method further comprises:
receiving, by the second terminal apparatus, fifth information from the first terminal apparatus, wherein the fifth information comprises a first resource determined by the first terminal apparatus for the first terminal apparatus and sixth indication information, and the sixth indication information indicates that the first resource comprised in the fifth information is the first resource determined by the first terminal apparatus for the first terminal apparatus.

25. A communication apparatus, wherein the communication apparatus comprises one or more processors and a transceiver, and the one or more processors and the transceiver support the communication apparatus in performing the resource determining method according to any one of claims 1 to 13 or performing the resource determining method according to any one of claims 14 to 24.

26. A computer-readable storage medium, wherein the computer-readable storage medium stores computer instructions or a program, and when the computer instructions or the program are/is run on a computer, the computer is enabled to perform the resource determining method according to any one of claims 1 to 13 or perform the resource determining method according to any one of claims 14 to 24.

27. A communication system, wherein the communication system comprises a first terminal apparatus and a second terminal apparatus, the first terminal apparatus is configured to receive first indication information from the second terminal apparatus, the first indication information indicates the first terminal apparatus to determine a first resource for the second terminal apparatus, the first terminal apparatus is further configured to determine the first resource for the second terminal apparatus based on the first indication information, the first terminal apparatus is further configured to indicate the first resource to the second terminal apparatus, and the first resource is used by the second terminal apparatus to send data; and the second terminal apparatus is configured to send the first indication information to the first terminal apparatus, and the second terminal apparatus is further configured to receive the first resource from the first terminal apparatus.

FIG. 1a

FIG. 1b

FIG. 1c

FIG. 2

First terminal apparatus

Second terminal apparatus

301: Send first indication information

302: Determine a first resource for the second terminal apparatus based on the first indication information

303: Indicate the first resource to the second terminal apparatus

FIG. 3

First terminal apparatus

Second terminal apparatus

401: Determine priority information corresponding to a first resource

402: Send the priority information corresponding to the first resource to a second terminal apparatus

FIG. 4

Communication apparatus 50

Receiving module 501

Processing module 502

Sending module 503

FIG. 5

Communication apparatus 60

Sending module 601

Receiving module 602

FIG. 6

## INTERNATIONAL SEARCH REPORT

| | International application No. |
|---|---|
| | **PCT/CN2021/093450** |

**A.     CLASSIFICATION OF SUBJECT MATTER**

H04W 72/02(2009.01)i

According to International Patent Classification (IPC) or to both national classification and IPC

**B.     FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 设备到设备, 侧行链路, 侧链路, 资源, 配置, 确定, 分配, 自主, D2D, V2X, V2V, V2P, V2I, sidelink, SL, resource, configur+, determin+, allocat+, autonomous

**C.     DOCUMENTS CONSIDERED TO BE RELEVANT**

| Category* | Citation of document, with indication, where appropriate, of the relevant passages | Relevant to claim No. |
|---|---|---|
| Y | CN 110958096 A (TELECOMMUNICATIONS SCIENCE AND TECHNOLOGY RESEARCH INSTITUTE CO., LTD.) 03 April 2020 (2020-04-03)<br>    description paragraphs 20-266 | 1-27 |
| Y | CN 109792752 A (BEIJING XIAOMI MOBILE SOFTWARE CO., LTD.) 21 May 2019 (2019-05-21)<br>    description, paragraphs 3-22 | 1-27 |
| A | US 2018234973 A1 (LG ELECTRONICS INC.) 16 August 2018 (2018-08-16)<br>    entire document | 1-27 |
| A | NOKIA et al. "Sidelink resource allocation with relay UE"<br>*3GPP TSG RAN WG1 Meeting #89 R1-1708564*, 19 May 2017 (2017-05-19),<br>    entire document | 1-27 |
| A | HUAWEI et al. "Resource allocation for PC5 in Layer 2 evolved UE-to-NW relay"<br>*3GPP TSG-RAN WG2 Meeting #97 R2-1701340*, 17 February 2017 (2017-02-17),<br>    entire document | 1-27 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 July 2021** | **28 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/093450**

| Patent document cited in search report | | | Publication date (day/month/year) | Patent family member(s) | | | Publication date (day/month/year) |
|---|---|---|---|---|---|---|---|
| CN | 110958096 | A | 03 April 2020 | WO | 2020063070 | A1 | 02 April 2020 |
| CN | 109792752 | A | 21 May 2019 | WO | 2020132868 | A1 | 02 July 2020 |
| US | 2018234973 | A1 | 16 August 2018 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010415354